# EUROPEAN PATENT APPLICATION

(11) **EP 4 701 240 A1**
(43) Date of publication of application: **25.02.2026**
(21) Application number: 24802701.3
(22) Date of filing: 15.04.2024
(51) Int. Cl.: H04W 4/24

(54) **COMMUNICATION METHOD AND DEVICE**

(30) Priority: 08.05.2023 CN 202310514439
(71) Applicant: Huawei Technologies Co., Ltd., Shenzhen, Guangdong 518129 (CN)
(72) Inventor: ZHANG, Xinyi, Shenzhen, Guangdong 518129 (CN); JIA, Jianxin, Shenzhen, Guangdong 518129 (CN); YIN, Yu, Shenzhen, Guangdong 518129 (CN); ZHU, Lei, Shenzhen, Guangdong 518129 (CN); CHEN, Yichen, Shenzhen, Guangdong 518129 (CN)
(74) Representative: Körber, Martin Hans
(86) International application number: PCT/CN2024/087780
(87) International publication number: WO 2024/230415

(57) **Abstract**

Embodiments of this application provide a communication method and apparatus, and relate to the field of communication technologies. A first network element receives a first message from a second network element, where the first message includes an identifier of a first multicast/broadcast service MBS and at least one of the following information: a trigger of the first message, a delivery method of the first MBS, or a usage report of a terminal joining the first MBS for the first MBS. The first network element updates charging information of the first MBS based on the first message. According to the method provided in this application, charging for a multicast service or a broadcast service can be implemented, and a charging policy is further optimized.

## Description

### CROSS-REFERENCE TO RELATED APPLICATIONS

This application claims priority to Chinese Patent Application No. 202310514439.5, filed with the China National Intellectual Property Administration on May 8, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In order to measure network resource occupation of a user (which may be understood as a personal terminal receiving multicast/broadcast service data, or may be understood as a content provider sending multicast/broadcast service data), an operator collects fees from the user according to a preset tariff rule.

Currently, in a 4th generation (4th generation, 4G) mobile communication network, an enhanced multimedia broadcast/multicast service (enhanced multimedia broadcast/multicast service, eMBMS) has only a broadcast mode, and does not have a multicast mode (namely, a multicast mode). A core network cannot sense specific user equipments (user equipments, UEs) that receive the broadcast service data. Consequently, the operator cannot collect fees from a user who receives the broadcast service data, and can only collect fees from the content provider of the broadcast service data. However, as 5th generation (5th generation, 5G) multicast/broadcast is applied to stadium multicast (for example, a concert or a ball game), the operator urgently needs a new charging method to adapt to a requirement of the 5G multicast/broadcast.

### SUMMARY

This application provides a communication method and apparatus, to optimize multicast/broadcast charging.

According to a first aspect, this application provides a communication method. The method may be performed through interaction between a first network element and a second network element. The first network element may be a charging function network element (charging function, CHF) or a network element that can implement a charging function. The second network element may be a session management function network element (session management function, SMF) or a charging trigger function (charging trigger function, CTF). The CTF may be an independent network element, or may be a module responsible for charging in the SMF. This is not specifically limited herein.

The second network element generates a first message, where the first message includes an identifier of a first multicast/broadcast service (multicast/broadcast service, MBS) and at least one of the following information: a trigger of the first message, a delivery method of the first MBS, or a usage report of a terminal joining the first MBS for the first MBS. The second network element sends the first message to the first network element. The first network element updates charging information of the first MBS based on the first message.

In this application, the first network element updates the charging information of the first MBS based on the first message. The first message includes information such as the trigger of the first message, the delivery method of the MBS, and the usage report of the terminal joining the MBS for the MBS. In this manner, the first network element may charge the terminal joining the first MBS, and may collect fees from a user. In comparison with a conventional technology in which collecting fees from the user is not supported, multicast/broadcast charging can be further optimized.

It should be understood that the usage report of the terminal joining the first MBS for the first MBS may be replaced with "a usage report of the terminal joining the first MBS". The usage report may include a total volume of the first MBS, an uplink volume, a downlink volume, an uplink volume/a downlink volume, a trigger of the first message, a trigger timestamp of the first message, and the like.

It should be understood that updating the charging information of the first MBS may be understood as: opening the charging information of the first MBS, updating the charging information of the first MBS, terminating charging for the first MBS (Termination), or the like.

In an optional manner, the trigger of the first message includes:
a terminal joins the first MBS;
a terminal leaves the first MBS; or
the delivery method of the first MBS changes.

The foregoing cases serve as triggers of the first message, so that the second network element determines a specific time point to report the first message, and the second network element updates the charging information of the first MBS in a timely manner.

It should be noted that, that the terminal joins the first MBS may be understood as joining a first MBS session, and that the delivery method of the first MBS changes may be understood as that the delivery method of the first MBS is changed.

In an optional manner, the delivery method of the first MBS is a 5G core network individual multicast/broadcast service traffic delivery method (5GC Individual MBS traffic delivery method) or a 5G core network shared multicast/broadcast service traffic delivery method (5GC shared MBS traffic delivery method).

In an optional manner, a third network element generates a second message, and the third network element sends the second message to the first network element, where the second message includes at least one of the following information:
a charging identifier of the first MBS, a trigger of the second message, a service type of the first MBS, quality of service (quality of service, QoS) information of the first MBS, a service area of the first MBS, or a usage report of the first MBS.

In an optional manner, the second message further includes the identifier of the first multicast/broadcast service.

The third network element may be a multicast/broadcast-session management network element (multicast/broadcast-session management function, MB-SMF) or a CTF. The CTF may be an independent network element, or may be a module responsible for charging in the MB-SMF. The third network element sends the second message to the first network element, and the first network element may charge for the first MBS, and learn of network resource occupation of the first MBS.

In an optional manner, the trigger of the second message includes at least one of the following:
a session corresponding to the first MBS is activated;
a session corresponding to the first MBS is deactivated;
a multicast/broadcast user plane function network element configured to deliver data of the first MBS is added;
a multicast/broadcast user plane function network element configured to deliver data of the first MBS is removed;
an access network device for delivering data of the first MBS is added;
an access network device for delivering data of the first MBS is removed;
a user plane function network element configured to deliver data of the first MBS is added;
a user plane function network element configured to deliver data of the first MBS is removed; or
the service area of the first MBS changes.

The foregoing cases serve as triggers of the second message, so that the third network element determines a specific time point to report the second message, and the third network element updates the charging information of the first MBS in a timely manner.

In an optional manner, the first network element updates the charging information of the first MBS based on the second message.

It should be understood that updating the charging information of the first MBS may be understood as: opening the charging information of the first MBS, updating the charging information of the first MBS, terminating charging for the first MBS (Termination), or the like.

After the third network element reports the second message, the first network element updates the charging information of the first MBS based on the second message, to facilitate learning of resource occupation of the first MBS in a timely manner.

In an optional manner, the usage report includes a rating group.

In an optional manner, the first network element sends a quota of a rating group of the terminal for the first MBS to the second network element.

In an optional manner, the first network element sends a quota of the rating group of the first MBS to the third network element.

In an optional manner, the first network element sends a first charging policy to the second network element, where the first charging policy includes the trigger of the first message. The second network element determines, according to the first charging policy, to send the trigger of the first message.

In an optional manner, the first network element sends a second charging policy to the third network element, where the second charging policy includes the trigger of the second message. The third network element determines, according to the second charging policy, to send the trigger of the second message.

In an optional manner, the first network element is the CHF; the second network element is the SMF; and the third network element is the MB-SMF. Alternatively, the second network element is a first CTF, and the third network element is a second CTF.

In an optional manner, the second network element sends context request information of the first MBS to the third network element. The second network element receives context information of the first MBS from the third network element, where the context information includes identification information of the first network element. The second network element sends the first message to the first network element based on the identification information of the first network element.

It should be understood that the context request information of the first MBS may be an MBS session context status subscription request (Nmbsmf_MBSSession_ContextStatusSubscribe request).

In this manner, it can be ensured that the second network element and the third network element send a message to a same first network element, to help the first network element perform unified scheduling on the first MBS session and the quota of the terminal joining the first MBS. In addition, the first MBS session and the charging information of the terminal joining the first MBS are centralized on a same first network element, so that all charging data related to the first MBS can be further conveniently queried.

According to a second aspect, this application provides a communication method. The method may be performed through interaction between a first network element and a third network element. The first network element may be a CHF or a network element that can implement a charging function. The third network element may be an MB-SMF, or a module for charging in the MB-SMF, or a CTF. This is not specifically limited herein in this application.

The third network element generates a second message, where the second message includes an identifier of a first multicast/broadcast service MBS and at least one of the following information: a trigger of the second message, a service type of the first MBS, or a usage report of the first MBS. The third network element sends the second message to the first network element. The first network element updates charging information of the first MBS based on the second message.

The third network element sends the second message to the first network element, and the first network element may perform charging on the first MBS, and learn of network resource occupation of the first MBS by using a dynamic topology change of a base station and a user plane network element.

In an optional manner, the second message further includes a charging identifier of the first MBS, quality of service QoS information of the first MBS, and a service area of the first MBS.

In an optional manner, the trigger of the second message includes one of the following:
a session corresponding to the first MBS is activated;
a session corresponding to the first MBS is deactivated;
a multicast/broadcast user plane function network element configured to deliver data of the first MBS is added;
a multicast/broadcast user plane function network element configured to deliver data of the first MBS is removed;
an access network device for delivering data of the first MBS is added;
an access network device for delivering data of the first MBS is removed;
a user plane function network element configured to deliver data of the first MBS is added;
a user plane function network element configured to deliver data of the first MBS is removed; or
the service area of the first MBS changes.

It should be understood that the session corresponding to the first MBS in this specification may be replaced with a first MBS session.

In an optional manner, the third network element receives a second charging policy from the first network element, where the second charging policy includes the trigger of the second message. The third network element determines, according to the second charging policy, to send the trigger of the second message.

It should be understood that the charging policy in this specification may include MultipleUnitInformation.

According to a third aspect, an embodiment of this application provides a communication apparatus. The communication apparatus may be a first network element (for example, the first network element in the first aspect or the first network element in the second aspect) or a chip disposed inside the first network element, may be a second network element (for example, the second network element in the first aspect or the second network element in the second aspect) or a chip disposed inside the second network element, or may be a third network element (for example, the third network element in the first aspect or the third network element in the second aspect) or a chip disposed inside the third network element. The communication apparatus has a function of implementing either the first aspect or the second aspect. For example, the communication apparatus includes a corresponding module, unit, or means (means) for performing the steps in either the first aspect or the second aspect. The function, unit, or means may be implemented by software or hardware, or may be implemented by hardware executing corresponding software.

In a possible design, the communication apparatus includes a processing unit and a transceiver unit. The transceiver unit may be configured to receive and transmit a signal, to implement communication between the communication apparatus and another apparatus. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to receive and transmit a signal, and the processor executes program instructions, to complete the method in any possible design or implementation of the first aspect and the second aspect. The communication apparatus may further include one or more memories. The memory is configured to be coupled to the processor, and the memory may store a necessary computer program or necessary instructions for implementing the function in either the first aspect or the second aspect. The processor may execute the computer program or the instructions stored in the memory. When the computer program or the instructions are executed, the communication apparatus is enabled to implement the method in any possible design or implementation of the first aspect to the third aspect.

In still another possible design, the communication apparatus includes a processor. The processor may be configured to be coupled to a memory. The memory may store a necessary computer program or necessary instructions for implementing the function in either the first aspect or the second aspect. The processor may execute the computer program or the instructions stored in the memory. When the computer program or the instructions are executed, the communication apparatus is enabled to implement the method in any possible design or implementation of the first aspect and the second aspect.

In yet another possible design, the communication apparatus includes a processor and an interface circuit. The processor is configured to: communicate with another apparatus through the interface circuit, and perform the method in any possible design or implementation of the first aspect and the second aspect.

It may be understood that in the third aspect, the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory and the processor may be integrated together, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fourth aspect, an embodiment of this application provides a communication system. The communication system includes the first network element, the second network element, and the third network element in the first aspect and the second aspect.

According to a fifth aspect, this application provides a chip system. The chip system includes a processor, may further include a memory, and is configured to implement the method in any one of the possible designs of the first aspect and the second aspect. The chip system may include a chip, or may include a chip and another discrete component.

According to a sixth aspect, this application further provides a computer-readable storage medium. The computer-readable storage medium stores computer-readable instructions. When the computer-readable instructions are run on a computer, the computer is enabled to perform the method in any one of the possible designs of the first aspect and the second aspect.

According to a seventh aspect, this application provides a computer program product including instructions. When the computer program product runs on a computer, the computer is enabled to perform the methods in various embodiments of the first aspect and the second aspect.

For technical effects that can be achieved in the second aspect to the seventh aspect, refer to the descriptions of the technical effects that can be achieved in the corresponding possible design solutions in the first aspect. Details are not repeatedly described herein in this application.

### BRIEF DESCRIPTION OF DRAWINGS

FIG. 1A is a diagram of a communication system;
FIG. 1B is a diagram of another communication system;
FIG. 2 is a diagram of still another communication system;
FIG. 3 is a diagram of a data delivery method;
FIG. 4 is a schematic flowchart of a communication method;
FIG. 5 is a schematic flowchart of a communication method;
FIG. 6A to FIG. 6C are a schematic flowchart of a communication method;
FIG. 7A to FIG. 7C are a schematic flowchart of a communication method;
FIG. 8 is a schematic flowchart of a communication method;
FIG. 9 is a schematic flowchart of a communication method;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of still another communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two. Therefore, for implementations of the apparatus and the method, refer to each other, and repeated parts are not described.

The following describes some terms of a system architecture designed in embodiments of this application, to facilitate understanding of a person skilled in the art.
(1) A user equipment is also referred to as a terminal device, is a device having a wireless transceiver function, and may communicate with one or more core network (core network, CN) devices (or may also be referred to as core devices) via an access network device (or may also be referred to as an access device) in a (radio) access network (radio access network, RAN) device.

The user equipment may also be referred to as an access terminal, a terminal, a subscriber unit, a subscriber station, a mobile station, a remote station, a remote terminal, a mobile device, a user terminal, a user agent, a user apparatus, or the like. The user equipment may be deployed in (deployed in) land, where the deployment includes indoor or outdoor, or handheld or vehicle-mounted deployment, may be deployed on a water surface (such as a ship), or may be deployed in the air (for example, on an airplane, a balloon, or a satellite). The user equipment may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, personal digital processing (personal digital assistant, PDA), or the like. Alternatively, the user equipment may be a handheld device or a computing device having a wireless communication function, another device connected to a wireless modem, a vehicle-mounted device, a wearable device, an uncrewed aerial vehicle device, a terminal in an internet of things or internet of vehicles, a terminal in any form in a 5G mobile communication network or future network, a relay user equipment, a terminal in a future evolved public land mobile network (public land mobile network, PLMN), or the like. The relay user equipment may be, for example, a 5G residential gateway (residential gateway, RG). For example, the user equipment may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. A type, a category, or the like of the terminal device is not limited in embodiments of this application. The user equipment may further include a terminal-side device, for example, a local switch (local switch, LSW) and/or a customer premise equipment (customer premise equipment, CPE), or the user equipment may access a network via the LSE or the CPE.

(2) A network device is a device that can provide a radio access function for a terminal, for example, a RAN device. The network device may support at least one wireless communication technology, for example, long term evolution (long term evolution, LTE), new radio (new radio, NR), or wideband code division multiple access (wideband code division multiple access, WCDMA).

For another example, the network device may include a core network device, and the core network device includes, for example, a core network element (network function, NF) such as an access and mobility management function (access and mobility management function, AMF).

In this application, a (radio) access network device may be configured to provide a network access function for an authorized user equipment in a specified area, and can use transmission tunnels of different quality based on a level of the user equipment, a service requirement, and the like.

The RAN device can manage radio resources and provide an access service for the user equipment, to forward a control signal and user equipment data between the user equipment and a core network. The RAN may alternatively be understood as a base station in a conventional network.

For example, the access network device in embodiments of this application may be any communication device that has a wireless transceiver function and that is configured to communicate with the user equipment. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, HeNB, or a home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the access network device may be a gNB or a transmission point (TRP or TP) in a 5G system such as an NR system, may be one antenna panel or a group of antenna panels (including a plurality of antenna panels) of a base station in a 5G system, or may be a network node, for example, a baseband unit (BBU) or a distributed unit (distributed unit, DU), that constitutes a gNB or a transmission point.

In some deployments, the gNB may include a central unit (central unit, CU) and the DU. The gNB may further include an active antenna unit (active antenna unit, AAU). The CU implements a part of functions of the gNB, and the DU implements a part of the functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in a core network. This is not limited in this application.

(3) A user plane network element is configured for packet routing and forwarding, handling of QoS of user plane data, and the like.

In a 5G communication system, the user plane network element may be a user plane function (user plane function, UPF) network element. In a future communication system, the user plane network element may still be the UPF network element, or may have another name. This is not limited in this application.

(4) A data network element is configured to provide a network for data transmission.

In a 5G communication system, the data network element may be a data network (data network, DN) element. In a future communication system, the data network element may still be the DN element, or may have another name. This is not limited in this application.

(5) An authentication server is configured to perform security authentication on a user. In a 5G communication system, the authentication server is an authentication server function (authentication server function, AUSF) network element.

(6) A mobility management network element is mainly used for mobility management, access management, and the like. In a 5G communication system, the access management network element may be an AMF, and mainly performs functions such as mobility management and access authentication/authorization. In addition, the mobility management network element is further responsible for transferring a user policy between a terminal and a policy control function (policy control function, PCF) network element.

(7) A network data analytics network element is mainly configured to provide a network data analytics function. In a 5G communication system, the network data analytics network element may be a network data analytics function (network data analytics function, NWDAF).

(8) A session management network element is mainly used for session management, internet protocol (internet protocol, IP) address assignment and management of a user equipment, selection of a termination point that can manage a user plane function interface, and a policy control and charging function interface, downlink data notification, and the like.

In a 5G communication system, the session management network element may be an SMF network element, and completes terminal IP address allocation, UPF selection, charging and QoS policy control, and the like.

(9) In a 5G communication system, an application network element may be an application function (application function, AF) network element, represents an application function of a third party or an operator, is an interface for obtaining external application data in a 5G network, and is mainly configured to transfer a requirement of an application side for a network side.

(10) A unified data management network element is responsible for management of a user identifier, subscription data, and authentication data, and serving network element registration management of a user. In a 5G communication system, the unified data management network element may be a unified data management (unified data management, UDM).

(11) A unified data repository network element is configured to store and retrieve subscription data of a UE, and the like. In a 5G communication system, the unified data repository network element may be a unified data repository (unified data repository, UDR) function.

(12) A policy control network element includes a user subscription data management function, a policy control function, a charging policy control function, QoS control, and the like, is a unified policy framework for guiding network behavior, and provides policy rule information and the like for a control plane function network element (for example, an AMF network element or an SMF network element).

In a 5G communication system, the policy control network element may be a PCF.

(13) A network function repository function network element provides a storage function and a selection function of network functional entity information for another core network element. In a 5G communication system, the network element may be a network function repository function (network function repository function, NRF) network element.

(14) An unstructured data storage network element stores and retrieves unstructured data of the unstructured data storage network element, for example, context of a UE. In a 5G communication system, the unstructured data storage network element may be an unstructured data storage function (unstructured data storage network function, UDSF).

(15) A charging network element is mainly configured to perform a charging function. In a 5G communication system, the charging network element may be a charging (Charging Function, CHF) network element.

(16) An edge security network element is mainly used for communication between different operator networks, and as a border gateway of different operator networks, is responsible for message filtering and policy management on a control plane interface between operators. In a 5G communication system, the edge security network element may be a security edge protection proxy (security edge protection proxy, SEPP).

(17) A service communication proxy network element is configured to support indirect communication and discovery of a proxy network function. In a 5G communication system, the service communication proxy network element may include a service communication proxy (service communication proxy, SCP).

(19) In a 5G communication system, a network exposure network element may be a network exposure function (network element function, NEF) network element, is mainly configured to expose a service and a capability of a 3GPP network function to an AF, and may also enable the AF to provide information for the 3GPP network function.

(20) A network slice selection function network element is responsible for selecting a network slice for a UE. In a 5G communication system, the application network element may be a network slice selection function (network slice selection function, NSSF) network element.

In a future communication system, for example, a 6th (6th generation, 6G) communication system, the foregoing network elements or devices may still use names of the network elements or devices in the 5G communication system, or may have other names. This is not limited in embodiments of this application. Functions of the network elements or devices may be completed by one independent network element, or may be jointly completed by several network elements. During actual deployment, network elements in a core network may be deployed on a same physical device or different physical devices. For example, in a possible deployment, an AMF and an SMF may be deployed on a same physical device. For another example, a network element in a 5G core network and a network element in a 4G core network may be deployed on a same physical device. This is not limited in embodiments of this application.

In a 5G communication system, the application network element may be an application function (application function, AF) network element. In a future communication system, the application network element may still be the AF network element, or may have another name. This is not limited in this application.

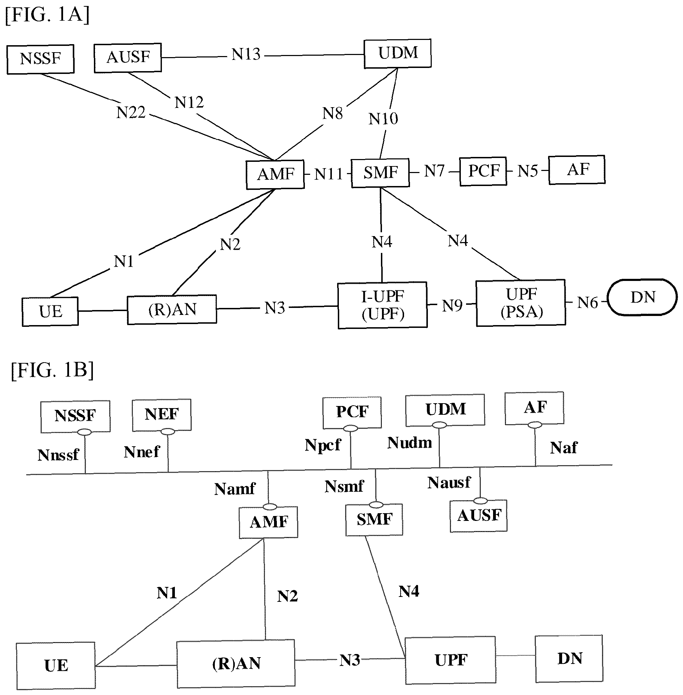

FIG. 1A and FIG. 1B are diagrams of 5G network architectures. FIG. 1A is a diagram of a 5G network architecture in a non-service-based architecture, and FIG. 1B is a diagram of a 5G network architecture in a service-based architecture (service-based architecture, SBA). The service-based architecture is a basic architecture of a 5G network. "Service-based" is mainly implemented on a control plane. The essence of the SBA is to define network functions as several "service" modules that can be flexibly invoked according to three principles of "self-contained, reusability, and independent management". Based on this, an operator can flexibly customize networking based on a service requirement. Interaction between the network functions is implemented through service invoking. Each network function externally presents a common service-based interface, which can be invoked by an authorized network function or service. FIG. 1B is a diagram of an example of a service-based architecture of a 5G network. In the architecture, a core network element may communicate with another core network element through a service-based interface. For example, a service-based interface corresponding to an AMF is referred to as an Namf interface, and an interface corresponding to an LMF may be referred to as an Nlmf interface.

The 5G network architectures shown in FIG. 1A and FIG. 1B each may include three parts: a terminal, a DN, and an operator network. The following briefly describes functions of some network elements.

An operator network may include but is not limited to one or more of the following network elements: an AUSF, a PCF, a UDM, an AF, an AMF, an SMF network element, a RAN device, a UPF, an NSSF, and the like. In the operator network, a network element or device other than a radio access network device may be referred to as a core network element or a core network device.

In addition, some communication interfaces shown in FIG. 1A include the following interfaces.

An N1 interface is a signaling plane interface between the AMF and a UE, and is configured to exchange a signaling message between a core network and the UE. For example, the UE is registered with a network, the UE creates a protocol data unit (protocol data unit, PDU) session, and a network side configures a policy for the UE.

An N2 interface is an interface between the AMF and the RAN, and is configured to transfer radio bearer control information and the like from the core network to the (R)AN.

An N3 interface is an interface between the RAN and the UPF, and is configured to transfer service data of the UE between the (R)AN and the UPF.

An N4 interface is an interface between the SMF and the UPF, and is configured to transfer information between a control plane and a user plane, including that a control plane terminal device completes a network access operation based on subscription information of the operator.

An N6 interface is an interface between the UPF and the DN, and is configured to transfer service data of the UE between the UPF and the DN.

An N5 interface is an interface between the PCF and the AF.

An N7 interface is an interface between the PCF and the SMF, and is configured to deliver PDU session granularity and service data flow granularity control policies.

An N8 interface is an interface between the AMF and the UDM, and is used by the AMF to obtain access and mobility management-related subscription data and authentication data from the UDM, used by the AMF to register current mobility management-related information of the UE with the UDM, and the like

An N9 interface is an interface between two UPFs. For example, as shown in FIG. 1A, the N9 interface is an interface between an intermediate UPF (intermediate UPF, I-UPF) and a UPF serving as a PDU session anchor (PDU session anchor, PSA).

An N10 interface is an interface between the SMF and the UDM, and is used by the SMF to obtain session management-related subscription data from the UDM, used by the SMF to register current session-related information of the UE with the UDM, and the like.

An N11 interface is an interface between the SMF and the AMF, and is configured to transfer PDU session tunnel information between the RAN and the UPF, a control message sent to the UE, radio resource control information sent to the RAN, and the like.

An N12 interface includes an interface between the AMF and the AUSF.

An N13 interface includes an interface between the AUSF and the UDM.

An N22 interface includes an interface between the NSSF and the AMF.

It may be understood that the foregoing network elements or functions may be network elements in a hardware device, may be software functions running on dedicated hardware, or may be virtualized functions instantiated on a platform (for example, a cloud platform). Optionally, the foregoing network elements or functions may be implemented by one device, may be jointly implemented by a plurality of devices, or may be implemented by one functional module in one device. This is not specifically limited in embodiments of this application.

A session management network element, a user plane network element, and a mobility management network element in this application may be respectively the SMF, the UPF, and the AMF in FIG. 1A, or may be network elements that have functions of the SMF, the UPF, and the AMF in a future communication network, for example, a 6G network. This is not limited in this application. In embodiments of this application, an example in which the SMF, the UPF, and the AMF respectively serve as the session management network element, the user plane network element, and the mobility management network element is used for description.

It should be noted that names of the network elements and the interfaces between the network elements in FIG. 1A and/or FIG. 1B are merely examples. During specific implementation, the names of the network elements and the interfaces between the network elements may be others. This is not specifically limited in embodiments of this application.

In previous generations of mobile communication technologies, for example, a 3rd generation (3rd generation, 3G) mobile communication technology and a 4G mobile communication technology, it is difficult to promote a multicast/broadcast solution. Specifically, in an existing multicast/broadcast solution, a dedicated network element and interface that support multicast/broadcast need to be added based on an existing communication architecture, and a dedicated multicast/broadcast channel is further required for support. This not only increases overheads of operators, but also increases complexity of terminals.

To overcome the foregoing difficulties, supporting a multicast/broadcast function (5G multicast broadcast service, 5MBS) on the basis of a 5th generation mobile communication network architecture becomes a key research topic.

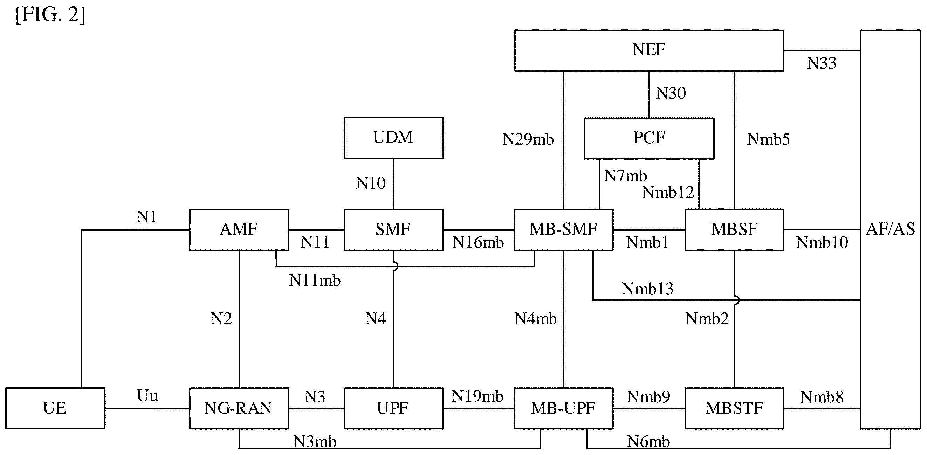

FIG. 2 is an architecture used in a current latest 5G multicast/broadcast technical specification, and provides a network architecture used to support a multicast/broadcast service. The architecture is extended based on the architecture shown in FIG. 1A. For example, two functional entities, a multicast/broadcast session management function (multicast/broadcast session management function, MB-SMF) network element and a multicast/broadcast user plane function (multicast/broadcast user plane function, MB-UPF) network element, are added to support a multicast/broadcast service/function.

The MB-SMF may implement a control plane function of the multicast/broadcast service, and is responsible for management of a multicast/broadcast service/group/session. For a control plane, the MB-SMF may be connected to an NEF and/or a multicast/broadcast service function (multicast/broadcast service function, MBSF), for example, configured to receive information related to the multicast/broadcast service (for example, descriptions of the multicast/broadcast service). In addition, the MB-SMF may be further connected to a PCF, for example, may extract a PCC rule related to the multicast/broadcast service. For a user plane, the MB-UPF may be connected to a multicast/broadcast service transport function (multicast/broadcast service transport function, MBSTF) and/or an AF/AS, and is configured to receive service data of the multicast/broadcast service. It should be noted that the MB-SMF and an SMF may be co-deployed or individually deployed, and the MB-UPF and a UPF may be co-deployed or individually deployed. This is not limited in this application.

It should be noted that the foregoing name of the MB-SMF or the MB-UPF is an example. In a 5G network, the MB-SMF or the MB-UPF may have another name. This is not limited in this application. When the architecture in FIG. 2 is used for charging, a CHF is further included, and charging is performed by exchanging information between the CHF and the SMF and between the CHF and the MB-SMF.

In embodiments of this application, the function may also be referred to as a network element, a network function or a functional entity, a device, or the like. For example, an access and mobility management function may also be referred to as an access and mobility management network element, an access and mobility management network function, an access and mobility management functional entity, or the like. Names of functions are not limited in this application. A person skilled in the art may replace the names of the functions with other names to perform same functions. This falls within the protection scope of this application.

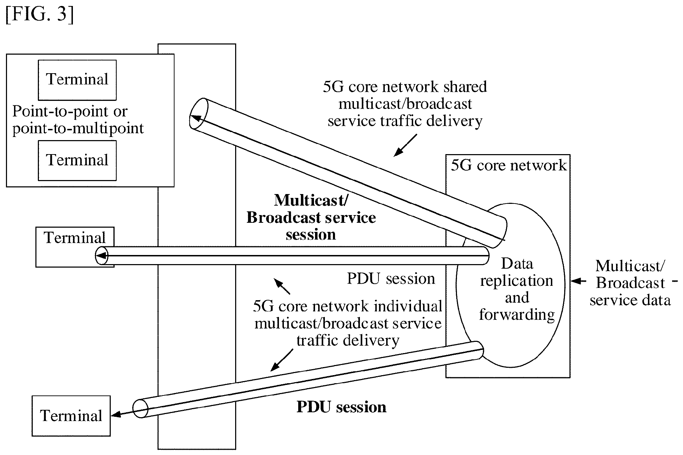

As shown in FIG. 3, that an access network device supports a multicast/broadcast function may be understood as that the access network device supports delivering multicast/broadcast service data in a 5GC shared MBS traffic delivery method, and that an access network device does not support a multicast/broadcast function may be understood as that the access network device does not support delivering multicast/broadcast service data in the 5G core network shared multicast/broadcast service traffic delivery method, in other words, supports delivering multicast/broadcast service data only in a 5GC individual MBS traffic delivery method. It should be understood that, after arriving at the access network device (for example, a RAN), the multicast/broadcast service data is processed by a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer of the RAN, and then is sent to each UE that receives the multicast/broadcast service data.

A plurality of users using the 5GC shared MBS traffic delivery jointly occupy one network resource, and each of a plurality of users using the 5GC individual MBS traffic delivery occupies one network resource. For different delivery methods used by a UE, network resource occupation of the UE varies. However, currently, different charging policies are not provided for different delivery methods. In addition, only a broadcast mode exists in 4G. An operator cannot directly collect fees from a user for the broadcast service data, but can only collect fees from a content provider for the broadcast service data. However, multicast is introduced in 5G, and it is not clear how the operator collects fees from a user for the multicast service data. Considering the foregoing situation, the existing charging policy urgently needs to be optimized.

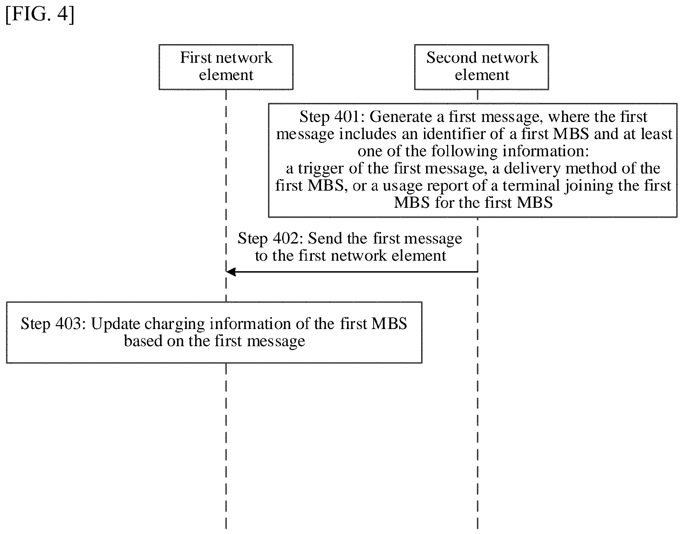

Based on this, this application provides a communication method, as shown in FIG. 4. The communication method may be implemented through data exchange between a first network element and a second network element. The first network element may be a CHF, or a network element that can implement a charging function. The second network element may be an SMF, a module for charging in the SMF, or a CTF. This is not specifically limited herein in this application. The communication method is performed as follows.

Step 401: The second network element generates a first message, where the first message includes an identifier of a first MBS and at least one of the following information:
a trigger of the first message, a delivery method of the first MBS, or a usage report of a terminal joining the first MBS for the first MBS.

The first message is used for a charging request in this application. The first message may be individually sent, or may be carried in another message for sending. This is not specifically limited herein in this application. The first message carries the identifier of the first MBS, so that the first network element learns of a specific service for which charging calculation is to be performed. For example, if the identifier of the first MBS is a multicast video service, the first network element may perform traffic calculation for the multicast video service.

The trigger of the first message indicates a specific reason why the second network element reports the first message to the first network element, so that the first network element adjusts charging information (the charging information may be understood as a charging data record (charging data record, CDR), and the data record may alternatively be understood as details or a bill). For example, if the trigger of the first message is that a terminal 1 leaves a session corresponding to the first MBS, the terminal 1 no longer reports traffic data related to the first MBS, and the first network element may perform fee deduction processing for traffic usage reported by the terminal 1 and generate a CDR of using the first MBS by the terminal 1 this time. This is merely an example for description herein. This is not specifically limited during actual application. The delivery method of the first MBS is a 5GC individual MBS traffic delivery method or a 5GC shared MBS traffic delivery method. The first network element may adjust the charging information based on the delivery method of the first MBS reported by the first network element. For example, when the 5GC individual MBS traffic delivery method is used, the first network element may individually perform traffic charging on a terminal joining the first MBS; or when the 5GC shared MBS traffic delivery method is used, the first network element may uniformly perform traffic charging on terminals joining the first MBS, and traffic is evenly allocated to terminals for traffic charging. This is merely an example for description herein. This is not specifically limited during actual application. The usage report of the terminal joining the first MBS for the first MBS may indicate current charging of the terminal, so that the first network element updates the charging information of the first MBS. For example, the usage report may include a rating group (the rating group may indicate a service of a same charging type, and the rating group may correspond to a charging rule, for example, 5 yuan/GB traffic, free calls, and 0.5 yuan/per SMS message) of the terminal. The first network element may adjust the charging information of the first MBS based on a condition of the rating group of the terminal. Used traffic in the charging rule corresponding to the rating group is free of charge, and charging for traffic that exceeds the charging rule corresponding to the rating group is performed in a tiered charging mode.

Specifically, the trigger of the first message includes the following cases.

Case 1: A terminal joins a session corresponding to the first MBS.

Because the terminal joins the first MBS, a service used by the terminal changes, and a rating group corresponding to the first MBS used by the terminal may be different from a rating group of another service (for example, browsing news online or making a call) used by the terminal. Therefore, the second network element is triggered to report the first message, so that the first network element delivers a granted quota and the trigger of the first message to the second network element.

It should be understood that the terminal joining the session corresponding to the first MBS may be replaced with the following several descriptions: The terminal joins a first MBS session (session), the terminal joins the first MBS, or the like.

Case 2: A terminal leaves a session corresponding to the first MBS.

Because the terminal leaves the first MBS, to be specific, the terminal no longer needs to receive a service of the first MBS, usage of the first MBS used by the terminal may change. Therefore, the second network element is triggered to report the first message, so that the first network element performs fee deduction processing for usage reported by the second network element, and updates the charging information of the first MBS.

It should be understood that the terminal leaving the session corresponding to the first MBS may be replaced with the following several descriptions: The terminal leaves a first MBS session (session), the terminal leaves the first MBS, or the like.

Case 3: The delivery method of the first MBS changes.

Because the delivery method of the first MBS changes, a charging manner of the first MBS may change, for example, may change from the 5GC individual MBS traffic delivery method to the 5GC shared MBS traffic delivery method, and the second network element cannot collect statistics on traffic in the 5GC shared MBS traffic delivery method. Therefore, the second network element is triggered to report the first message, so that the first network element updates a charging policy of the first MBS. The first network element may further perform fee deduction processing for usage for which the 5GC individual MBS traffic delivery method is used and that is reported by the second network element, and update the charging information of the first MBS.

In addition, during actual application, the trigger of the first message may alternatively be that the terminal leaves the session corresponding to the first MBS, and the delivery method of the first MBS changes; the terminal joins the session corresponding to the first MBS, and the delivery method of the first MBS changes; a first terminal leaves the session corresponding to the first MBS, and a second terminal joins the session corresponding to the first MBS; a first terminal leaves the session corresponding to the first MBS, a second terminal joins the session corresponding to the first MBS, and the delivery method of the first MBS changes; or the like. This is not specifically limited herein in this application. In addition, when a plurality of terminals join/leave the session corresponding to the first MBS, a timer may be set. After the timer ends, the second network element reports the first message. In this manner, signaling exchange can be reduced.

Step 402: The second network element sends the first message to the first network element.

In a service registration phase, a first network element may register with an NRF whether to support a 5G multicast/broadcast capability. When determining that a first network element needs to be requested to charge for the first MBS, the second network element may request the first network element from the NRF. An identifier needs to be carried in a request message to indicate that the NRF needs to return a first network element supporting the 5G multicast/broadcast capability, and the NRF returns, in a response, the first network element supporting the 5G multicast/broadcast capability. In this case, the second network element may determine the first network element, and the second network element may send the first message to the first network element.

Step 403: The first network element updates the charging information of the first MBS based on the first message.

Specifically, for different first messages, updating the charging information of the first MBS in step 403 may be understood differently. For example, when creation of the session corresponding to the first MBS is completed, the terminal initially joins the first MBS, the first message may be understood as "initial (Initial)", and in this case, updating the charging information of the first MBS may be understood as opening the charging information of the first MBS. When a terminal joins the session corresponding to the first MBS, a location of the terminal changes, and a base station at which a service is received is changed from a base station that supports an MBS to a base station that does not support an MBS, the first message may be understood as "update (Update)", and in this case, updating the charging information of the first MBS may be understood as updating the charging information of the first MBS. When a terminal joining the session corresponding to the first MBS leaves the session corresponding to the first MBS, updating the charging information of the first MBS may be understood as terminating charging for the first MBS (Termination). A specific meaning of "update" in step 403 is not specifically limited herein in this application, and may be flexibly determined based on actual application. This is not specifically limited herein.

It should be noted that the first message may include one or more of the following:
a charging data request (Charging Data Request/Charging Data Request [Initial]/Charging Data Request [Update]/Charging Data Request [Termination]), a converged charging create request (Nchf_ConvergedCharging_Create request), a converged charging update request (Nchf_ConvergedCharging_Update request), a converged charging release request (Nchf_ConvergedCharging_Release request), an offline charging create request (Nchf_OfflineOnlyCharging_Create request), an offline charging update request (Nchf_OfflineOnlyCharging_Update request), an offline charging release request (Nchf_OfflineOnlyCharging_Release request), or the like. Alternatively, the first message may be a new message. This is not limited in this patent.

Usually, the charging information of the first MBS may include: a total volume of the first MBS, an uplink volume, a downlink volume, an uplink volume/a downlink volume, a UPF ID, MBS session information (for example, an ID of the terminal joining the MBS session, a session ID, and QoS), and the like.

Specifically, when the first message is different information, the first network element may update the charging information of the first MBS in different manners. Herein, the charging information of the first MBS is described by using a CDR of the first MBS as an example. Details are as follows.

Manner 1: The first message includes the identifier of the first MBS and the trigger of the first message.

The first network element obtains the identifier of the first MBS and the trigger of the first message, and updates the CDR of the first MBS. For example, when the trigger of the first message is that the terminal joins the session corresponding to the first MBS, the first network element opens the CDR of the first MBS, and records the identifier of the first MBS in the CDR, in other words, subsequently, when the second network element includes the identifier of the first MBS and sends the first message to the first network element, the first network element may update the identifier of the first MBS to the CDR. In addition, the first network element may further record a joining time point of the terminal, an identifier of the second network element, and the like in the CDR.

Manner 2: The first message includes the identifier of the first MBS and the delivery method of the first MBS.

The first network element obtains the identifier of the first MBS and the delivery method of the first MBS, and updates the CDR of the first MBS. For example, when the trigger of the first message is that the terminal joins the session corresponding to the first MBS, the first network element opens the CDR of the first MBS, and records the identifier of the first MBS and the delivery method of the first MBS in the CDR. The first network element may deliver the trigger of the first MBS to the second network element based on the identifier of the first MBS. The first network element may further deliver a granted quota of the first MBS to the second network element based on the delivery method of the first MBS and the rating group of the first MBS.

Manner 3: The first message includes the identifier of the first MBS, the delivery method of the first MBS, and the usage report of the terminal joining the first MBS for the first MBS.

The first network element obtains the identifier of the first MBS, the delivery method of the first MBS, and the usage report of the terminal joining the first MBS for the first MBS, and updates the CDR of the first MBS. For example, when the trigger of the first message is that the delivery method of the first MBS changes, the first network element may obtain the usage report of the first MBS, and perform fee deduction processing. The first network element may record, in the CDR, the delivery method of the first MBS, the identifier of the first MBS, and the usage report of the terminal joining the first MBS for the first MBS. The first network element may further deliver a granted quota of the first MBS to the second network element based on the delivery method of the first MBS and the rating group of the first MBS. For example, when the trigger of the first message is that the terminal leaves the session corresponding to the first MBS, the first network element may record the usage report of the first MBS in the CDR, and perform fee deduction processing based on usage and according to the charging rule corresponding to the rating group. The first network element may further deliver, to the second network element based on the trigger of the first message, removal of a granted quota of the first MBS.

In addition, there are other manners. For example, the first message includes the identifier of the first MBS, the trigger of the first message, and the delivery method of the first MBS; the first message includes the identifier of the first MBS, the trigger of the first message, and the usage report of the terminal joining the first MBS for the first MBS; the first message includes the identifier of the first MBS and the usage report of the terminal joining the first MBS for the first MBS; or the first message includes the identifier of the first MBS, the trigger of the first message, the delivery method of the first MBS, and the usage report of the terminal joining the first MBS for the first MBS. How the first network element updates the charging information of the first MBS may be understood with reference to Manner 1 to Manner 3.

In this application, the first network element updates the charging information of the first MBS based on the first message. The first message includes information such as the trigger of the first message, the delivery method of the MBS, and the usage report of the terminal joining the MBS for the MBS. In this manner, the first network element may charge the terminal joining the MBS, and may collect fees from a user, and further, multicast/broadcast charging can be optimized.

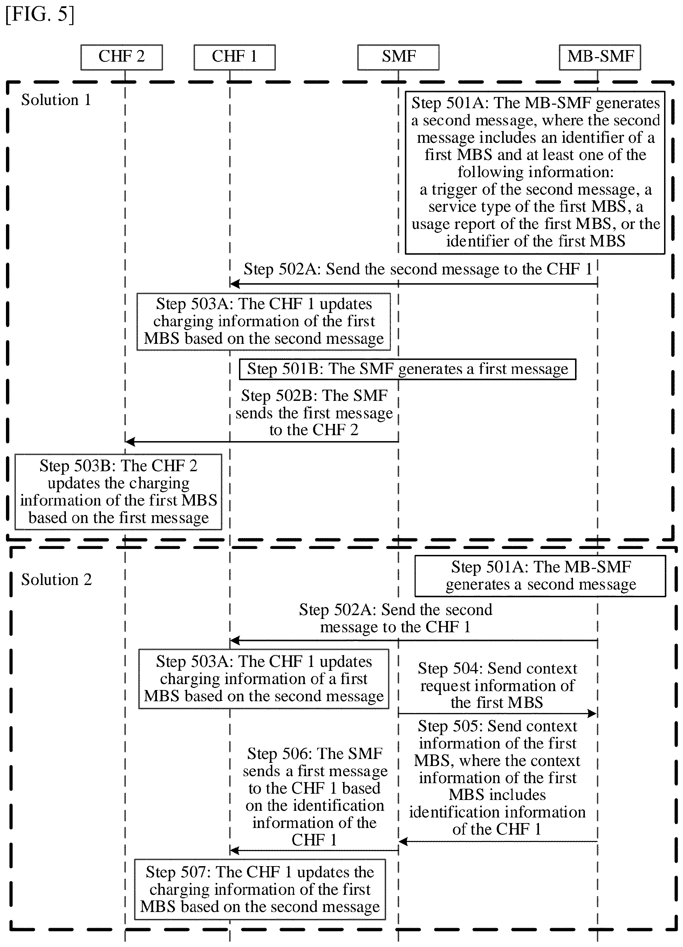

This application further provides a communication method, as shown in FIG. 5. The communication method may be implemented through data exchange between a first network element, a second network element, and a third network element. The first network element may be a CHF, or a network element that can implement a charging function. The second network element may be an SMF, a module for charging in the SMF, or a first CTF. The third network element is an MB-SMF, a module for charging in the MB-SMF, or a second CTF. This is not specifically limited herein in this application. In FIG. 5, an example in which first network elements are a CHF 1 and a CHF 2, a second network element is an SMF, and a third network element is an MB-SMF is used for description. During actual execution, two different solutions may be distinguished for execution. The solutions are performed as follows.

### Solution 1

Step 501A: The MB-SMF generates a second message, where the second message includes at least one of the following information:
a trigger of the second message, a service type of a first MBS, a usage report of a first MBS, or an identifier of a first MBS.

The second message is used for a charging request in this application. The second message may be individually sent, or may be carried in another message for sending. This is not specifically limited herein in this application. The second message carries the identifier of the first MBS, so that the first network element learns of a specific service for which charging calculation is to be performed.

It should be noted that the second message may include one or more of the following:
a charging data request (Charging Data Request/Charging Data Request [Initial]/Charging Data Request [Update]/Charging Data Request [Termination]), a converged charging create request (Nchf_ConvergedCharging_Create request), a converged charging update request (Nchf_ConvergedCharging_Update request), a converged charging release request (Nchf_ConvergedCharging_Release request), an offline charging create request (Nchf_OfflineOnlyCharging_Create request), an offline charging update request (Nchf_OfflineOnlyCharging_Update request), an offline charging release request (Nchf_OfflineOnlyCharging_Release request), or the like. Alternatively, the second message may be a new message. This is not limited in this patent.

The trigger of the second message indicates a specific reason why the third network element reports the first message to the first network element, so that the first network element adjusts charging information. For example, if the trigger of the second message is that a session corresponding to the first MBS is activated, the first network element may generate charging information of the first MBS. This is merely an example for description herein. This is not specifically limited during actual application. The service type of the first MBS is broadcast or multicast, and the first network element may configure charging policies based on different service types of the first MBS. The usage report of the first MBS may indicate current charging of the first MBS, so that the first network element updates the charging information of the first MBS. For example, the first network element may adjust quota information of the first MBS based on the usage report of the first MBS.

Specifically, the trigger of the second message includes the following cases.

Case 1: A session corresponding to the first MBS is activated.

Because the session corresponding to the first MBS is activated, the first network element generates the charging information based on this. Therefore, the third network element is triggered to report the second message.

Case 2: A session corresponding to the first MBS is deactivated.

Because the session corresponding to the first MBS is deactivated, the first network element no longer continues to generate the charging information based on the first MBS. Therefore, the third network element is triggered to report the second message.

Case 3: A multicast/broadcast user plane function network element configured to deliver data of the first MBS is added.

Because the multicast/broadcast user plane function network element for delivering the data of the first MBS is added, the CHF may need to update a granted quota. For example, a total quota of the first MBS session is 10 MB. If there is only one UPF configured to deliver the data of the first MBS, a quota allocated by the CHF to the UPF is 10 MB. However, if there are two UPFs, a quota allocated to each UPF is 5 MB.

Case 4: A multicast/broadcast user plane function network element configured to deliver data of the first MBS is removed.

The CHF may need to record, in a CDR of the first MBS, final usage reported by the multicast/broadcast user plane function network element, and perform fee deduction processing. Therefore, when Case 4 occurs, the second message needs to be reported.

Case 5: An access network device for delivering data of the first MBS is added.

Case 6: An access network device for delivering data of the first MBS is removed.

Case 7: A user plane function network element configured to deliver data of the first MBS is added.

Case 8: A user plane function network element configured to deliver data of the first MBS is removed.

In Case 5 to Case 8, the data of the first MBS is replicated and forwarded to the RAN/UPF. This helps an operator know actual network resource occupation of the MBS session. The CHF may record, in a CDR, replication corresponding to usage of the MBS session at a current moment (the replication may be represented as a quantity of replication times, specific replicated information, and the like). Therefore, when the foregoing cases occur, the second message needs to be reported.

Case 9: A service area of the first MBS changes.

In a 4G MBMS, data of the first MBS is delivered to all base stations in a specified service area. Therefore, usage of the first MBS may be calculated based on a magnitude of the data of the first MBS and a quantity of base stations in the specified service area. Therefore, when the service area of the first MBS changes, a quantity of base stations in the area also changes, and the second message needs to be reported.

It is clear that, during actual application, the trigger of the second message may be a combination of the foregoing several cases. For example, the RAN for delivering the data of the first MBS is added, and the UPF configured to deliver the data of the first MBS is removed. This is not specifically limited herein.

In addition, the second message further includes: a charging identifier of the first MBS, quality of service QoS information of the first MBS, and the service area of the first MBS.

Specifically, after receiving an MBS session request message from a content provider, the MB-SMF may generate the charging identifier of the first MBS based on a parameter of the MBS session carried in the MBS session request message, so that the first network element determines, based on the charging identifier of the first MBS, that charging for the session corresponding to the first MBS needs to be performed. The second message includes the QoS information of the first MBS and the service area of the first MBS, so that an operator can perform charging and reconciliation.

Step 502A: The MB-SMF sends the second message to the CHF 1.

In a service registration phase, a CHF may register with an NRF whether to support a 5G multicast/broadcast capability. When receiving a multicast/broadcast session creation request, the MB-SMF may request a CHF from the NRF. An identifier needs to be carried in a request message to indicate that the NRF needs to return a CHF supporting the 5G multicast/broadcast capability. In this case, the MB-SMF may determine the CHF 1, and the MB-SMF may send the second message to the CHF 1.

Step 503A: The CHF 1 updates the charging information of the first MBS based on the second message.

Specifically, for different second messages, updating the charging information of the first MBS in step 503A may be understood differently. For example, when the first MBS session is created, the first message may be understood as "initial (Initial)", and in this case, updating the charging information of the first MBS may be understood as opening the charging information of the first MBS. When an MB-UPF is added to the first MBS session, the first message may be understood as "update (Update)", and in this case, updating the charging information of the first MBS may be understood as updating the charging information of the first MBS. When the first MBS session is released, updating the charging information of the first MBS may be understood as terminating charging for the first MBS (Termination). A specific meaning of "update" in step 503A is not specifically limited herein in this application, and may be flexibly determined based on actual application. This is not specifically limited herein.

Specifically, when the second message is different information, the first network element may update the charging information of the first MBS in the following different manners.

Manner 1: The second message includes the identifier of the first MBS and the service type of the first MBS.

After obtaining the identifier of the first MBS and the service type of the first MBS, the first network element opens the CDR of the first MBS. For example, the first network element opens the CDR of the first MBS, and records the identifier and the service type of the first MBS. The first network element may deliver the trigger of the first MBS to the third network element based on the identifier and the service type of the first MBS. The first network element may further deliver a granted quota of the first MBS to the third network element based on a rating group of the first MBS.

Manner 2: The second message includes the identifier of the first MBS and the trigger of the second message.

The first network element obtains the identifier of the first MBS and the trigger of the second message, and updates the CDR of the first MBS. For example, when the trigger of the first message is that an MB-UPF is added, the first network element obtains the identifier of the first MBS and finds the corresponding CDR, and records an identifier of the added MB-UPF in the CDR. The second network element may further adjust, based on a rating group of the first MBS, a granted quota of the first MBS, and update, to the second network element, a granted quota of the first MBS.

Manner 3: The second message includes the identifier of the first MBS, the trigger of the second message, and the usage report of the first MBS.

The first network element obtains the identifier of the first MBS, the trigger of the second message, and the usage report of the first MBS, and updates the CDR of the first MBS. For example, when a trigger of the first message is that an MB-UPF is removed, the first network element obtains the identifier of the first MBS and finds the corresponding CDR, and records the trigger and the usage report in the CDR. The first network element may perform fee deduction processing based on the usage report of the first MBS. The first network element may further adjust, based on the trigger of the second message and the usage report, a granted quota of the first MBS, and deliver a granted quota of the first MBS to the third network element.

Step 501B: The SMF generates a first message.

Step 502B: The SMF sends the first message to the CHF 2.

Step 503B: The CHF 2 updates the charging information of the first MBS based on the first message.

Step 501A to step 501B, and step 501B and step 502B may be performed in no particular order. The charging information of the first MBS is updated by different CHFs. During actual application, different charging information of the first MBS cannot be integrated in this manner.

In Solution 1, statistics may be collected on the usage and a quantity of replications of the data of the first MBS of the first MBS session. This helps measure network resource occupation of the first MBS session, and collecting fees from the content provider. In addition, in Solution 1, usage of a terminal joining a 1^{st} MBS in different delivery methods may be measured. This helps measure network resource occupation when a user uses the 1^{st} MBS, and collecting fees from the user.

### Solution 2

Optionally, to ensure consistency between the CHF 1 and the CHF 2, the following step 504 to step 506 may be further performed. In this case, step 501A and step 502A may be performed first, and then step 504 to step 506 are performed. Step 506 may replace step 501B. The steps are performed as follows. Steps that are the same as those in Solution 1 are not repeatedly described herein.

Step 504: The SMF sends context request information of a first MBS to the MB-SMF.

Step 505: The MB-SMF sends context information of the first MBS to the SMF, where the context information of the first MBS includes identification information of the CHF 1.

Step 506: The SMF sends a first message to the CHF 1 based on the identification information of the CHF 1.

Step 507: The CHF 1 updates charging information of the first MBS based on a second message.

After obtaining the context information of the first MBS, the SMF individually stores the context information of the first MBS, and provides the context information of the first MBS for all UEs that request to join a multicast group on the SMF. The SMF may generate a charging identifier for the context information of the first MBS, and when a 1^{st} UE requests to join a session corresponding to the first MBS, request the CHF 1 for the charging information of the first MBS.

In Solution 2, because the SMF and the MB-SMF send messages to a same CHF, it further helps more accurately measure usage of a user. In addition, when a quota of the first MBS is used for all users joining the first MBS, adjustment may be performed in a timely manner when the quota is exhausted or a remaining quota amount reaches a threshold.

In addition, it should be further noted that the trigger of the first message may serve as a first charging policy and may be sent by the first network element, and the trigger of the second message may serve as a second charging policy and may be sent by the first network element.

To better describe the solutions of this application, the following specific application scenarios may be used for description. It is clear that, during actual application, the specific scenarios are not limited. The following scenarios are described by using data exchange between an AF, an SMF (equivalent to a second network element), an MB-SMF (equivalent to a third network element), an MB-UPF, a UPF, a CHF (equivalent to a first network element), a UE, a RAN, and an AMF as an example.

Scenario 1: A UE joins a multicast group by using a 5GC shared MBS traffic delivery method.

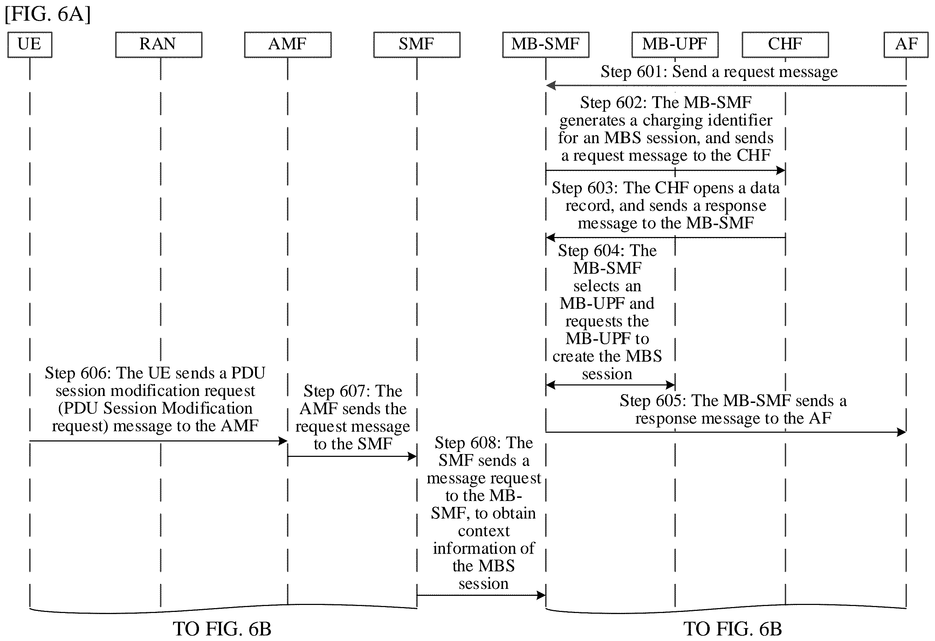

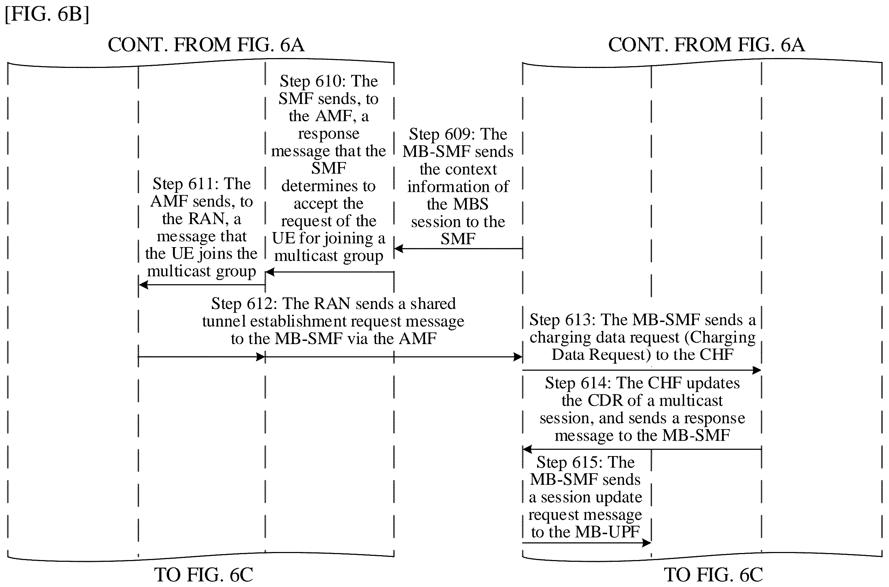

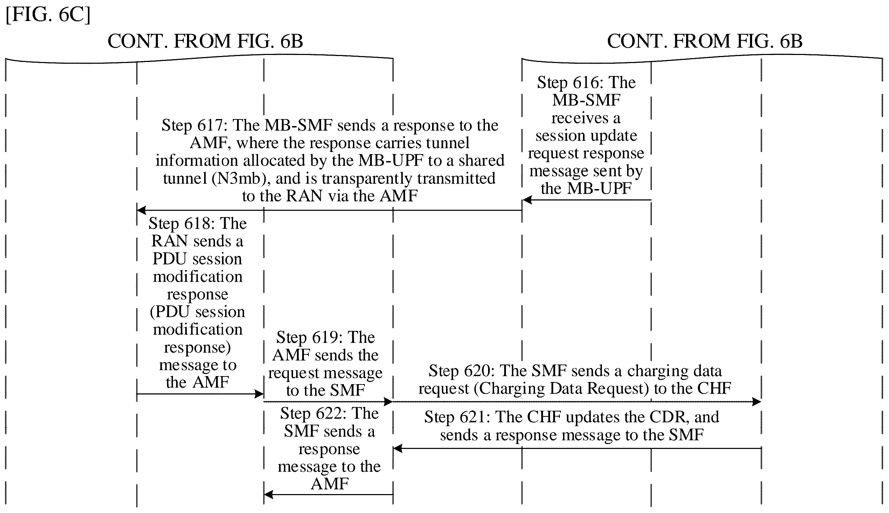

Refer to FIG. 6A to FIG. 6C. The following steps are performed.

Step 601: An AF sends a request message to an MB-SMF.

The request message is an MBS session create request (Nmbsmf MBSSession Create Request). The MBS session create request carries MBS session information (including QoS parameters such as a 5G QoS identifier (5G QoS identifier, 5QI), an allocation and retention priority (allocation and retention priority, ARP), and a maximum bit rate (maximum bit rate, MBR)), an MBS service type (multicast/broadcast), and the like, and optionally carries an MBS session ID or a request for allocating a temporary mobile group identity (temporary mobile group identity, TMGI), a service area of an MBS, and the like.

Step 602: The MB-SMF may generate a charging identifier for an MBS session, and send a request message to a CHF.

The request message may be a charging data request Charging Data Request, may be an Nchf_ConvergedCharging_Create message, or may be an Nchf_OfflineOnlyCharging_Create message, and is mainly used to request a charging policy (namely, a second charging policy). The request message carries the charging identifier (Charging ID), an MBS session identifier, an MBS service type, MBS session information (including QoS parameters such as a 5QI, an ARP, and an MBR), and optionally carries a service area of an MBS. In an online charging scenario, the request message may further include a quota management request.

Step 603: The CHF opens a CDR, and sends a response message to the MB-SMF, where the response message includes a trigger (to be specific, the trigger of the second message mentioned above, which is not described in detail herein, and may be understood with reference to the foregoing descriptions).

Specifically, the response message is a charging data response Charging Data Response, and may provide a report trigger applicable to usage of a multicast service, including adding/removing an MB-UPF, adding/removing a base station/UPF, the service area of the MBS (which may be a TA granularity, an SA granularity, or a cell granularity) changing, and the like (namely, the trigger of the second message). In the online charging scenario, the response message may further include information about a quota allocated by the CHF to a multicast session.

Step 604: The MB-SMF selects an MB-UPF and requests the MB-UPF to create the MBS session.

In step 604, the MB-UPF may be selected based on a local setting of the MB-SMF.

Step 605: The MB-SMF sends a response message to the AF.

The response message is an MBS session create response Nmbsmf MBSSession Create Response, so that the AF learns that the creation of the MBS session is completed.

Step 606: The UE sends a PDU session modification request PDU Session Modification request message to an AMF.

The PDU Session Modification request message is sent by using a created PDU session, and carries a request for joining the multicast group and an identifier of the multicast group.

Step 607: The AMF sends the request message to an SMF by using an Nsmf PDUSession UpdateSMContext request.

If the SMF finds that an MBS session context of the multicast group is not subscribed to, perform step 608.

Step 608: The SMF sends a message Nmbsmf MBSSession ContextStatusSubscribe request to the MB-SMF, to obtain context information of the MBS session.

Step 609: The MB-SMF sends the context information of the MBS session to the SMF.

In step 609, an identifier of a CHF selected by the MB-SMF, multicast QosFlow information (QoS Profile), and the like may be carried.

Step 610: The SMF sends, to the AMF, a response message that the SMF determines to accept the request of the UE for joining the multicast group.

Step 611: The AMF sends, to a RAN, a message that the UE joins the multicast group.

If the RAN does not establish a shared tunnel for the multicast group that the UE joins, perform step 612.

Step 612: The RAN sends a shared tunnel establishment request message to the MB-SMF via the AMF.

The request message is an Nmbsmf MBSSession ContextUpdate request, and may carry the identifier of the multicast group, a RAN node ID, and tunnel information allocated by the RAN to the shared tunnel (N3mb).

Step 613: The MB-SMF sends a Charging Data Request to the CHF.

The Charging Data Request may be understood as the second message mentioned above, and may include charging information and an identifier of an added base station.

Step 614: The CHF updates the CDR of the multicast session, and sends a response message to the MB-SMF.

Step 615: The MB-SMF sends a session update request message to the MB-UPF.

The request message is used to request to allocate tunnel information to the shared tunnel (N3mb), and the tunnel information allocated by the RAN to the shared tunnel (N3mb) in step 612 is delivered.

Step 616: The MB-SMF receives a session update request response message sent by the MB-UPF.

The response message includes the tunnel information allocated by the MB-UPF to the shared tunnel (N3mb).

Step 617: The MB-SMF sends a response to the AMF, where the response carries the tunnel information allocated by the MB-UPF to the shared tunnel (N3mb), and is transparently transmitted to the RAN via the AMF.

Step 618: The RAN sends a PDU session modification response message to the AMF.

Step 619: The AMF sends the request message to the SMF.

The request message is the Nsmf PDUSession UpdateSMContext request, and carries an indication that the RAN supports an MBS.

Step 620: The SMF sends a Charging Data Request to the CHF.

The Charging Data Request may be understood as a first message, and carries the identifier of the multicast group that the UE joins, an action identifying that the UE joins the multicast session, the UE joining the multicast group by using the 5GC shared MBS traffic delivery method, and a rating group of the UE.

In step 619, sending may need to be performed by the SMF to the CHF by default when the UE joins the session, or may be locally configured based on the SMF.

Step 621: The CHF opens/updates the CDR, and sends a response message to the SMF.

The response message is the Charging Data Response, and optionally provides a trigger that is of the first message and that is applicable to usage of the multicast service, including the UE joining the multicast group, a delivery method of the UE changing, and the like. In the online charging scenario, the response message may further include a quota that is for a rating group related to the multicast service and that is allocated by the CHF to the UE. In addition, when a 1^{st} UE in the multicast group joins the multicast group, step 621 is opening the CDR. When a non-1^{st} UE in the multicast group joins the multicast group, step 621 is updating CDR.

Step 622: The SMF sends a response message Nsmf PDUSession UpdateSMContext response to the AMF.

It should be noted that steps of interaction between the SMF and the CHF: step 620 and step 621, may be alternatively performed after step 607. An execution sequence of step 620 and step 621 is not specifically limited in this application. Scenario 1 is merely an example for description. Similarly, steps of interaction between the MB-SMF and the CHF: step 602 and step 603, for example, may be alternatively performed after step 604. An execution sequence of step 602 and step 603 is not specifically limited in this application. Scenario 1 is merely an example for description. Steps of interaction between the MB-SMF and the CHF: step 613 and step 614, may be alternatively performed after step 616. An execution sequence of step 613 and step 614 is not specifically limited in this application. Scenario 1 is merely an example for description.

Scenario 2: A UE joins a multicast group by using a 5GC individual MBS traffic delivery method.

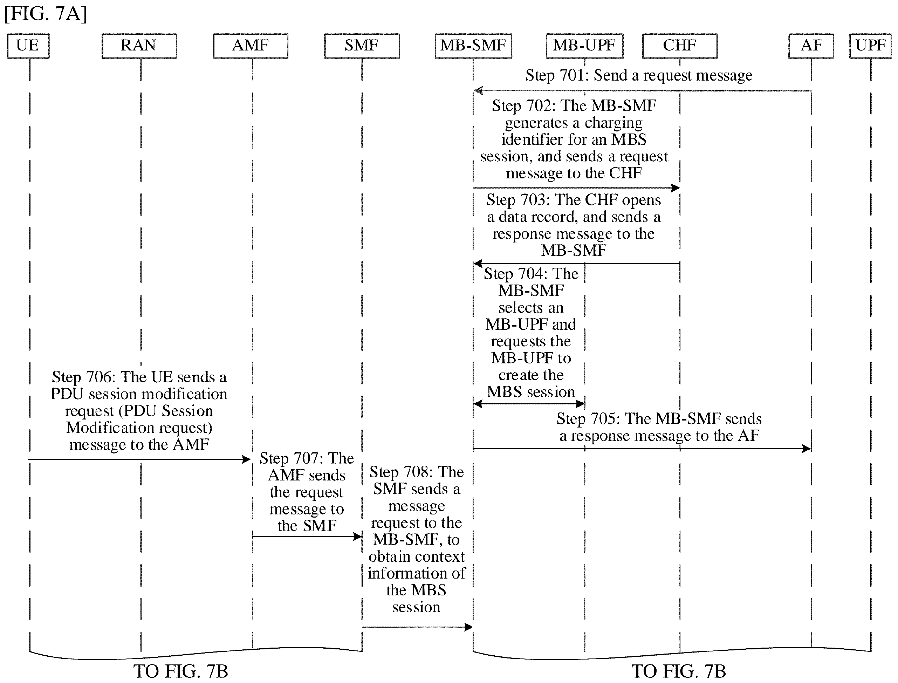

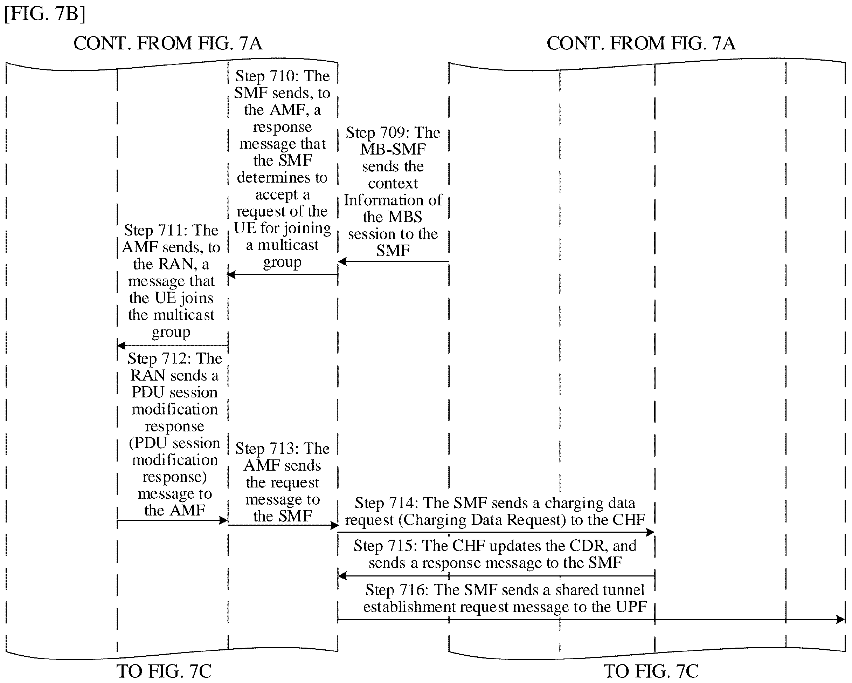

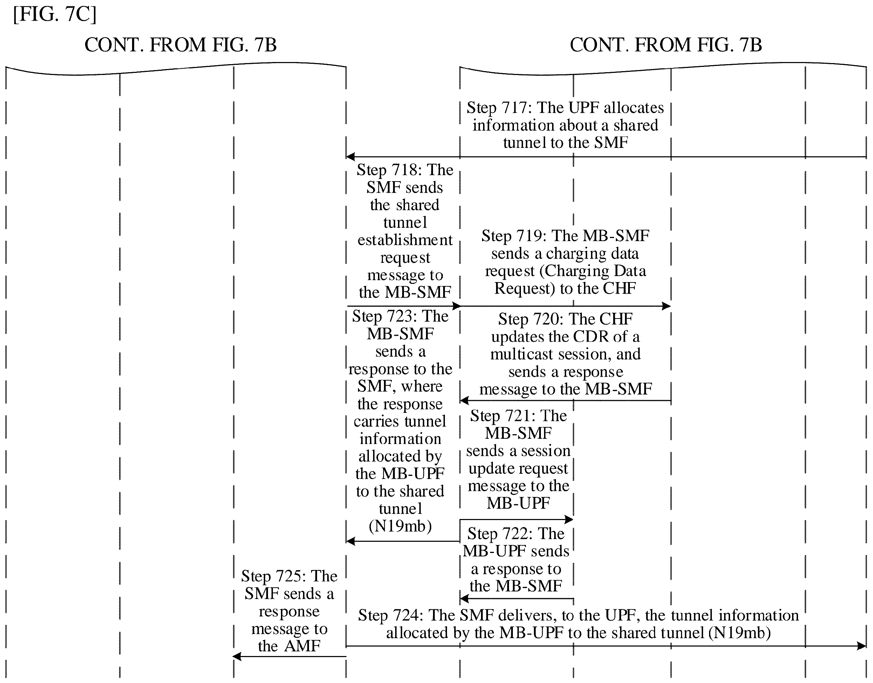

Refer to FIG. 7A to FIG. 7C. The following steps are performed.

Step 701: An AF sends a request message to an MB-SMF.

Step 702: The MB-SMF may generate a charging identifier for an MBS session, and send a request message to a CHF.

Step 703: The CHF opens a CDR, and sends a response message to the MB-SMF, where the response message includes a trigger.

Step 704: The MB-SMF selects an MB-UPF and requests the MB-UPF to create the session.

Step 705: The MB-SMF sends a response message to the AF.

Step 701 to step 705 may be understood with reference to step 601 to step 605 in Scenario 1. Details are not described herein.

Step 706: The UE sends a PDU Session Modification request message to an AMF.

Step 707: The AMF sends the request message to an SMF by using an Nsmf_PDUSession_UpdateSMContext request.

Step 708: The SMF sends a message Nmbsmf_MBSSession_ContextStatusSubscribe request to the MB-SMF, to obtain context information of the MBS session.

Step 709: The MB-SMF sends the context information of the MBS session to the SMF.

Step 710: The SMF sends, to the AMF, a response message that the SMF determines to accept a request of the UE for joining the multicast group.

Step 711: The AMF sends, to a RAN, a message that the UE joins the multicast group.

Step 712: The RAN sends a PDU session modification response message to the AMF.

Step 713: The AMF sends the request message to the SMF.

Step 714: The SMF sends a Charging Data Request to the CHF.

The Charging Data Request may be understood as the foregoing first message, and carries an identifier of the multicast group that the UE joins, an action identifying that the UE joins the multicast session, the UE joining the multicast group by using the 5GC individual MBS traffic delivery method, and a rating group of the UE.

In step 714, sending may need to be performed by the SMF to the CHF by default when the UE joins the session, or may be locally configured based on the SMF.

Step 715: The CHF updates the CDR, and sends a response message to the SMF.

The response message is a Charging Data Response, and optionally provides a trigger applicable to usage of a multicast service, including the UE leaving the multicast group, a delivery method of the UE changing, and the like. In an online charging scenario, the response message may further include a quota that is for a rating group related to the multicast service and that is allocated by the CHF to the UE.

The CHF may further indicate the SMF/a UPF to individually collect statistics on usage of the multicast service of the UE, and set a dedicated rating group (to be specific, when the UE uses the 5GC individual MBS traffic delivery method, the UPF forwards a packet by using an N3 tunnel of a PDU session of the UE, and the CHF may indicate the UPF to collect statistics on a common service and the multicast service in a distinguished manner).

If the RAN does not support an MBS, and the UPF does not establish a shared tunnel for the multicast group with the MB-UPF, perform step 716.

Step 716: The SMF sends a shared tunnel establishment request message to the UPF.

Step 717: The UPF allocates information about the shared tunnel to the SMF.

Step 718: The SMF sends the shared tunnel establishment request message to the MB-SMF.

The request message carries the identifier of the multicast group, a UPF identifier, and tunnel information allocated by the UPF to the shared tunnel (N19mb).

Step 719: The MB-SMF sends a Charging Data Request to the CHF.

The Charging Data Request may be understood as the foregoing second message, and may include charging information and an identifier of an added UPF.

Step 720: The CHF updates the CDR of the multicast session, and sends a Charging Data Response response message to the MB-SMF.

Step 721: The MB-SMF sends a session update request message to the MB-UPF.

The request message is used to request to allocate the tunnel information to the shared tunnel (N19mb), and the tunnel information allocated by the RAN to the shared tunnel (N19mb) in step 716 is delivered.

Step 722: The MB-UPF sends a response to the MB-SMF.

Step 723: The MB-SMF sends a response to the SMF, where the response carries the tunnel information allocated by the MB-UPF to the shared tunnel (N19mb).

Step 724: The SMF delivers, to the UPF, the tunnel information allocated by the MB-UPF to the shared tunnel (N19mb).

Step 725: The SMF sends a response message Nsmf_PDUSession_UpdateSMContext response to the AMF.

It should be noted that steps of interaction between the SMF and the CHF: step 714 and step 715, may be alternatively performed after step 724. An execution sequence of step 714 and step 715 is not specifically limited in this application. Scenario 2 is merely an example for description. Similarly, steps of interaction between the MB-SMF and the CHF: step 702 and step 703, for example, may be alternatively performed after step 704. An execution sequence of step 702 and step 703 is not specifically limited in this application. Scenario 2 is merely an example for description. Steps of interaction between the MB-SMF and the CHF: step 719 and step 720, may be alternatively performed after step 721. An execution sequence of step 719 and step 720 is not specifically limited in this application. Scenario 2 is merely an example for description.

Scenario 3: A UE leaves a multicast group by using a 5GC shared MBS traffic delivery method.

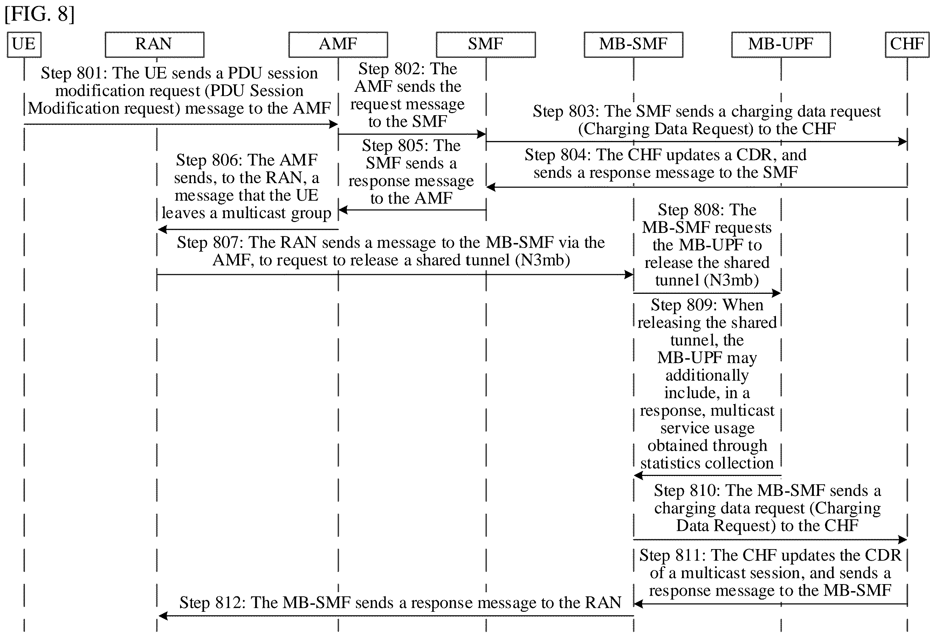

Refer to FIG. 8. The following steps are performed.

Step 801: The UE sends a PDU Session Modification request request message to an AMF.

The PDU Session Modification request request message is sent by using a created PDU session, and carries a request for leaving the multicast group and an identifier of the multicast group.

Step 802: The AMF sends the request message to an SMF by using an Nsmf_PDUSession_UpdateSMContext request.

Step 803: The SMF sends a Charging Data Request to a CHF.

The Charging Data Request may be understood as the foregoing first message, and carries the identifier of the multicast group that the UE leaves, an action identifying that the UE leaves a multicast session, the UE leaving the multicast group by using the 5GC shared MBS traffic delivery method, and a usage report of the UE. The usage report includes a rating group of the UE, time points at which the UE joins and leaves the multicast group, and a start time point and an end time point at which the UE uses a current delivery method.

Optionally, if the CHF indicates the SMF to report a first message in a delayed manner, the SMF may send, to the CHF, a delivery method used by the UE for one or more times after the UE leaves the multicast group, and the start time point and the end time point of using the delivery method each time.

Step 804: The CHF updates a CDR, and sends a response message to the SMF.

The response message is a Charging Data Response message. Optionally, the CHF may remove a trigger of the first message and quota information of a first MBS that are delivered to the SMF previously (for example, in an MBS session creation phase).

If a RAN supports an MBS, and the UE is a last UE in the multicast group in the RAN, perform step 805.

Step 805: The SMF sends a response message Nsmf_PDUSession_UpdateSMContext response to the AMF.

Step 806: The AMF sends, to the RAN, a message that the UE leaves the multicast group.

Step 807: The RAN sends an Nmbsmf_MBSSession_ContextUpdate request message to an MB-SMF via the AMF, to request to release a shared tunnel (N3mb).

Step 808: The MB-SMF requests an MB-UPF to release the shared tunnel (N3mb).

Step 809: When releasing the shared tunnel, the MB-UPF may additionally include, in a response, multicast service usage obtained through statistics collection.

Step 810: The MB-SMF sends a Charging Data Request to the CHF.

The Charging Data Request may be understood as the foregoing second message, where the second message includes the reported multicast service usage obtained through statistics collection by the MB-UPF, and an ID of a released base station.

Step 811: The CHF updates the CDR of the multicast session, and sends a Charging Data Response response message to the MB-SMF.

Step 812: The MB-SMF sends a response message Nmbsmf_MBSSession_ContextUpdate response to the RAN.

It should be noted that steps of interaction between the SMF and the CHF: step 803 and step 804, may be alternatively performed after step 805. An execution sequence of step 803 and step 804 is not specifically limited in this application. Scenario 3 is merely an example for description. Similarly, steps of interaction between the MB-SMF and the CHF: step 810 and step 811, for example, may be alternatively performed after step 807. An execution sequence of step 810 and step 811 is not specifically limited in this application. Scenario 3 is merely an example for description.

Scenario 4: A UE leaves a multicast group by using a 5GC individual MBS traffic delivery method.

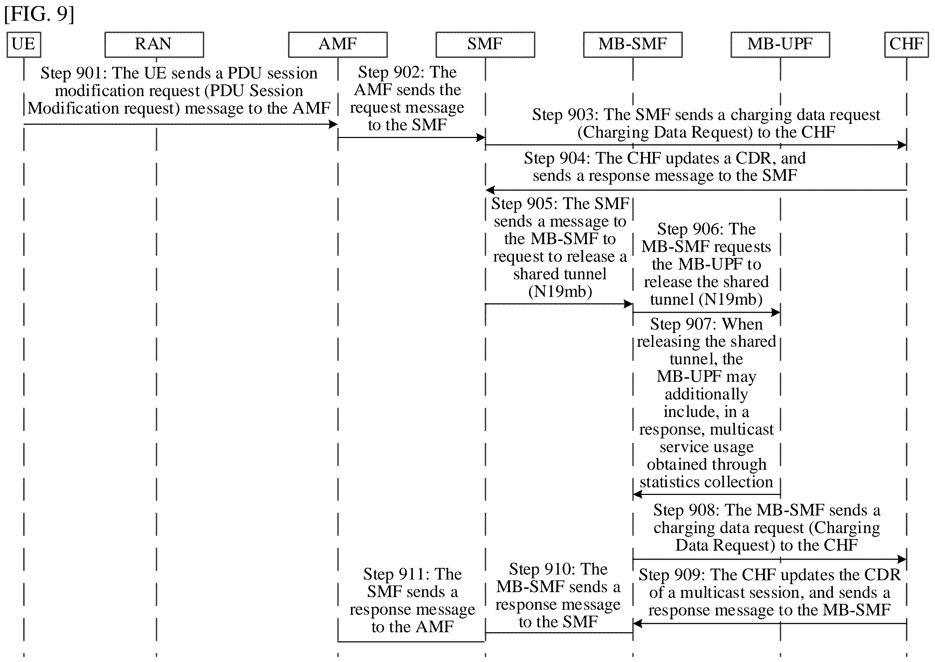

Refer to FIG. 9. The following steps are performed.

Step 901: The UE sends a PDU Session Modification request request message to an AMF.

The PDU Session Modification request request message is sent by using a created PDU session, and carries a request for leaving the multicast group and an identifier of the multicast group.

Step 902: The AMF sends the request message to an SMF by using an Nsmf_PDUSession_UpdateSMContext request.

Step 903: The SMF sends a Charging Data Request to a CHF.

The Charging Data Request may be understood as the foregoing first message, and carries the identifier of the multicast group that the UE leaves, an action identifying that the UE leaves a multicast session, the UE leaving the multicast group by using the 5GC individual MBS traffic delivery method, and a usage report of the UE. The usage report includes a rating group of the UE, time points at which the UE joins and leaves the multicast group, and a start time point and an end time point at which the UE uses a current delivery method.

Optionally, if the CHF indicates the SMF to report a first message in a delayed manner, the SMF may send, to the CHF, a delivery method used by the UE for one or more times after the UE leaves the multicast group, and the start time point and the end time point of using the delivery method each time.

Step 904: The CHF updates a CDR, and sends a response message to the SMF.

If the UE is a last UE that is in the multicast group and that is on a UPF, perform step 905.

Step 905: The SMF sends an Nmbsmf_MBSSession_ContextUpdate request message to an MB-SMF to request to release a shared tunnel (N19mb).

Step 906: The MB-SMF requests an MB-UPF to release the shared tunnel (N19mb).

Step 907: When releasing the shared tunnel, the MB-UPF may additionally include, in a response, multicast service usage obtained through statistics collection.

Step 908: The MB-SMF sends a Charging Data Request to the CHF.

The Charging Data Request may be understood as the foregoing second message, where the second message includes the reported multicast service usage obtained through statistics collection by the MB-UPF, and an ID of a released UPF.

Step 909: The CHF updates the CDR of the multicast session, and sends a Charging Data Response response message to the MB-SMF.

Step 910: The MB-SMF sends a response message Nmbsmf_MBSSession_MBSSession_ContextUpdate response to the SMF.

Step 911: The SMF sends a response message Nsmf_PDUSession_UpdateSMContext response to the AMF.

It should be noted that steps of interaction between the SMF and the CHF: step 903 and step 904, may be alternatively performed after step 911. An execution sequence of step 903 and step 904 is not specifically limited in this application. Scenario 4 is merely an example for description. Similarly, steps of interaction between the MB-SMF and the CHF: step 908 and step 909, for example, may be alternatively performed after step 905. An execution sequence of step 908 and step 909 is not specifically limited in this application. Scenario 4 is merely an example for description.

In Scenario 1 to Scenario 4, precise charging for the first MBS session can be implemented (based on a volume volume/time time/an event event, instead of being implemented based on a coverage area in a 4G MBMS), and collecting fees from a content provider is still supported. In addition, dynamic topology changes of the base station and the UPF are reported. This improves detailedness and accuracy of a standard for measuring network resource occupation of the multicast session, and supports charging a terminal that uses the first MBS (based on the volume volume/time time/event event, and for the 4G MBMS, the terminal cannot be charged), and collecting fees from the terminal. In addition, duration of a user using the shared delivery method and usage that is obtained through statistics collection by the UPF and that is of a user using the individual delivery method are reported. This improves the detailedness and accuracy of the standard for measuring the network resource occupation of the user in the multicast session.

The foregoing mainly describes the solutions provided in embodiments of this application from a perspective of device interaction. It may be understood that to implement the foregoing functions, each device may include a corresponding hardware structure and/or software module for performing each function. A person skilled in the art should be easily aware that in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

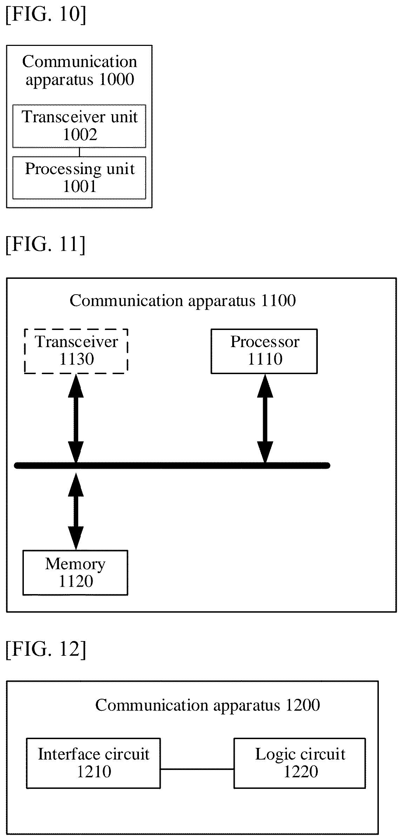

When an integrated unit is used, FIG. 10 is a block diagram of a possible example of a communication apparatus according to an embodiment of this application. As shown in FIG. 10, the communication apparatus 1000 may include a processing unit 1001 and a transceiver unit 1002. The processing unit 1001 is configured to: control and manage an action of the communication apparatus 1000. The transceiver unit 1002 is configured to support communication between the communication apparatus 1000 and another device. Optionally, the transceiver unit 1002 may include a receiving unit and/or a sending unit, respectively configured to perform a receiving operation and a sending operation. Optionally, the communication apparatus 1000 may further include a storage unit, configured to store program code and/or data of the communication apparatus 1000. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the foregoing first network element, second network element, third network element, or the like.

In an embodiment, the communication apparatus 1000 may serve as the first network element. The transceiver unit 1002 is configured to receive a first message from a second network element. The first message includes an identifier of a first multicast/broadcast service MBS and at least one of the following information:
a trigger of the first message, a delivery method of the first MBS, or a usage report of a terminal joining the first MBS for the first MBS.

The processing unit 1001 updates charging information of the first MBS based on the first message.

Optionally, the trigger of the first message includes:
a terminal joins a session corresponding to the first MBS;
a terminal leaves a session corresponding to the first MBS; or
the delivery method of the first MBS changes.

Optionally, the delivery method of the first MBS is a 5G core network individual multicast/broadcast service traffic delivery method 5GC individual MBS traffic delivery method or a 5G core network shared multicast/broadcast service traffic delivery method 5GC shared MBS traffic delivery method.

Optionally, the transceiver unit 1002 is further configured to receive a second message from a third network element. The second message includes at least one of the following information:
a charging identifier of the first MBS, a trigger of the second message, a service type of the first MBS, quality of service QoS information of the first MBS, a service area of the first MBS, or a usage report of the first MBS.

Optionally, the trigger of the second message includes at least one of the following:
a session corresponding to the first MBS is activated;
a session corresponding to the first MBS is deactivated;
a multicast/broadcast user plane function network element configured to deliver data of the first MBS is added;
a multicast/broadcast user plane function network element configured to deliver data of the first MBS is removed;
an access network device for delivering data of the first MBS is added;
an access network device for delivering data of the first MBS is removed;
a user plane function network element configured to deliver data of the first MBS is added;
a user plane function network element configured to deliver data of the first MBS is removed; or
the service area of the first MBS changes.

Optionally, the processing unit 1001 is further configured to update the charging information of the first MBS based on the second message.

Optionally, the usage report includes a rating group.

Optionally, the transceiver unit 1002 is further configured to send a quota of a rating group of the terminal for the first MBS to the second network element.

Optionally, the transceiver unit 1002 is further configured to send a quota of the rating group of the first MBS to the third network element.

Optionally, the transceiver unit 1002 is further configured to send a first charging policy to the second network element. The first charging policy includes the trigger of the first message.

Optionally, the transceiver unit 1002 is further configured to send a second charging policy to the third network element. The second charging policy includes the trigger of the second message.

Optionally, the first network element is a charging function CHF network element; and the second network element is a session management function SMF network element, and the third network element is a multicast/broadcast session management function MB-SMF network element; or the second network element is a first charging trigger function CTF, and the third network element is a second CTF.

In an embodiment, the communication apparatus 1000 may serve as the second network element. The processing unit 1001 is configured to generate a first message. The first message includes an identifier of a first multicast/broadcast service MBS and at least one of the following information:
a trigger of the first message, a delivery method of the first MBS, or a usage report of a terminal joining the first MBS for the first MBS.

The transceiver unit 1002 is configured to send the first message to a first network element.

Optionally, the trigger of the first message includes:
a terminal joins the first MBS;
a terminal leaves the first MBS; or
the delivery method of the first MBS changes.

Optionally, the delivery method of the first MBS is a 5G core network individual multicast/broadcast service traffic delivery method 5GC individual MBS traffic delivery method or a 5G core network shared multicast/broadcast service traffic delivery method 5GC shared MBS traffic delivery method.

Optionally, the usage report includes a rating group.

Optionally, the transceiver unit 1002 is further configured to receive a quota of a rating group of the terminal for the first MBS from the first network element.

Optionally, the transceiver unit 1002 is further configured to: send context request information of the first MBS to a third network element; receive context information of the first MBS from the third network element, where the context information includes identification information of the first network element; and send the first message to the first network element based on the identification information of the first network element.

Optionally, the transceiver unit 1002 is further configured to receive a first charging policy from the first network element. The first charging policy includes the trigger of the first message;
The processing unit 1001 is further configured to determine, according to the first charging policy, to send the trigger of the first message.

In an embodiment, the communication apparatus 1000 may serve as the third network element. The processing unit 1001 is configured to generate a second message. The second message includes an identifier of a first multicast/broadcast service MBS and at least one of the following information:
a charging identifier of the first MBS, a trigger of the second message, a service type of the first MBS, quality of service QoS information of the first MBS, a service area of the first MBS, or a usage report of the first MBS.

The transceiver unit 1002 is configured to send the second message to a first network element.

Optionally, the trigger of the second message includes one of the following:
a session corresponding to the first MBS is activated;
a session corresponding to the first MBS is deactivated;
a multicast/broadcast user plane function network element configured to deliver data of the first MBS is added;
a multicast/broadcast user plane function network element configured to deliver data of the first MBS is removed;
an access network device for delivering data of the first MBS is added;
an access network device for delivering data of the first MBS is removed;
a user plane function network element configured to deliver data of the first MBS is added;
a user plane function network element configured to deliver data of the first MBS is removed; or
the service area of the first MBS changes.

Optionally, the usage report includes a rating group.

Optionally, the transceiver unit 1002 is configured to receive a quota of a rating group of the first MBS from the first network element.

Optionally, the transceiver unit 1002 is configured to: receive context request information of the first MBS from a second network element; and send context information of the first MBS to the second network element, where the context information includes an identifier of the first network element.

Optionally, the transceiver unit 1002 is configured to receive a second charging policy from the first network element. The second charging policy includes the trigger of the second message.

The processing unit 1001 is configured to determine, according to the second charging policy, to send the trigger of the second message.

FIG. 11 shows a communication apparatus 1100 further provided in this application. The communication apparatus 1100 may be a chip or a chip system. The communication apparatus may be located in the device in any one of the foregoing method embodiments, for example, the access network device or the SMF, to perform an action corresponding to the device.

Optionally, the chip system may include a chip, or may include a chip and another discrete component.

The communication apparatus 1100 includes a processor 1110.

The processor 1110 is configured to execute a computer program stored in a memory 1120, to implement an action of each device in any one of the foregoing method embodiments.

The communication apparatus 1100 may further include the memory 1120, configured to store the computer program.

Optionally, the memory 1120 is coupled to the processor 1110. The coupling is an indirect coupling or a communication connection between apparatuses, units, or modules, may be in an electrical form, a mechanical from, or another form, and is used for information exchange between the apparatuses, the units, or the modules. Optionally, the memory 1120 and the processor 1110 are integrated together.

There may be one or more processors 1110 and one or more memories 1120. This is not limited.

Optionally, during actual application, the communication apparatus 1100 may include or may not include a transceiver 1130. A dashed box is used for illustration in the figure. The communication apparatus 1100 may exchange information with another device through the transceiver 1130. The transceiver 1130 may be a circuit, a bus, a transceiver, or any other apparatus that may be configured to exchange information.

In a possible implementation, the communication apparatus 1100 may be the access network device, the session management network element, or the multicast/broadcast session management network element in the foregoing method embodiments.

A specific connection medium between the transceiver 1130, the processor 1110, and the memory 1120 is not limited in this embodiment of this application. In this embodiment of this application, the memory 1120, the processor 1110, and the transceiver 1130 are connected through a bus in FIG. 11. The bus is represented by a bold line in FIG. 11. A manner of connection between other components is merely used for illustrative description. This is not limited thereto. The bus may be classified into an address bus, a data bus, a control bus, and the like. For ease of representation, only one bold line represents the bus in FIG. 11, but this does not indicate that there is only one bus or only one type of bus. In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed and completed by a hardware processor, or may be performed and completed by using a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. Alternatively, the memory in this embodiment of this application may be a circuit or any other apparatus that can implement a storage function, and is configured to store a computer program, program instructions, and/or data.

Based on the foregoing embodiments, refer to FIG. 12. An embodiment of this application further provides another communication apparatus 1200, including an interface circuit 1210 and a logic circuit 1220. The interface circuit 1210 may be understood as an input/output interface, and may be configured to perform receiving and sending steps of each device in any one of the foregoing method embodiments. The logic circuit 1220 may be configured to run code or instructions to perform the method performed by each device in any one of the foregoing embodiments. Details are not described again.

Based on the foregoing embodiments, an embodiment of this application further provides a computer-readable storage medium. The computer-readable storage medium stores instructions. When the instructions are executed, the method performed by each device in any foregoing method embodiment is implemented. For example, the method performed by the CHF, the MB-SMF, or the SMF in the embodiment shown in FIG. 5 is implemented. The computer-readable storage medium may include any medium that can store program code, for example, a USB flash drive, a removable hard disk drive, a read-only memory, a random access memory, a magnetic disk, or an optical disc.

Based on the foregoing embodiments, an embodiment of this application provides a communication system. The communication system includes the first network element (for example, the CHF), the second network element (for example, the SMF), and the third network element (for example, the MB-SMF) mentioned in any one of the foregoing method embodiments, and may be configured to perform the method performed by each device in any one of the foregoing method embodiments.

In addition, the communication system may further include a terminal device (for example, a UE or a first receive end). The terminal device may exchange data with an access network device and a session management network element, to perform a related method in any one of the foregoing method embodiments.

A person skilled in the art should understand that embodiments of this application may be provided as a method, a system, or a computer program product. Therefore, this application may use a form of hardware only embodiments, software only embodiments, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the apparatus (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by a computer or the processor of the another programmable data processing apparatus generate an apparatus for implementing a specified function in one or more procedures in the flowcharts and/or in one or more blocks in the block diagrams.

Alternatively, these computer program instructions may be stored in a computer-readable memory that can instruct a computer or another programmable data processing apparatus to operate in a specified manner, so that the instructions stored in the computer-readable memory generate an artifact that includes an instruction apparatus. The instruction apparatus implements a specified function in one or more procedures in the flowcharts and/or in one or more blocks in the block diagrams.

Alternatively, these computer program instructions may be loaded onto a computer or another programmable data processing apparatus, so that a series of operation steps are performed on the computer or the another programmable apparatus to generate computer-implemented processing. Therefore, the instructions executed on the computer or the another programmable apparatus provide steps for implementing a specified function in one or more procedures in the flowcharts and/or in one or more blocks in the block diagrams.

## Claims

1. A communication method, comprising:
receiving, by a first network element, a first message from a second network element, wherein the first message comprises an identifier of a first multicast/broadcast service MBS and at least one of the following information:
a trigger of the first message, a delivery method of the first MBS, or a usage report of a terminal joining the first MBS for the first MBS; and
updating, by the first network element, charging information of the first MBS based on the first message.

2. The method according to claim 1, wherein the trigger of the first message comprises:
a terminal joins a session corresponding to the first MBS;
a terminal leaves a session corresponding to the first MBS; or
the delivery method of the first MBS changes.

3. The method according to claim 1 or 2, wherein the delivery method of the first MBS is a 5G core network individual multicast/broadcast service traffic delivery method 5GC individual MBS traffic delivery method or a 5G core network shared multicast/broadcast service traffic delivery method 5GC shared MBS traffic delivery method.

4. The method according to any one of claims 1 to 3, further comprising:
receiving, by the first network element, a second message from a third network element, wherein the second message comprises at least one of the following information:
a charging identifier of the first MBS, a trigger of the second message, a service type of the first MBS, quality of service QoS information of the first MBS, a service area of the first MBS, or a usage report of the first MBS.

5. The method according to claim 4, wherein the trigger of the second message comprises at least one of the following:
a session corresponding to the first MBS is activated;
a session corresponding to the first MBS is deactivated;
a multicast/broadcast user plane function network element configured to deliver data of the first MBS is added;
a multicast/broadcast user plane function network element configured to deliver data of the first MBS is removed;
an access network device for delivering data of the first MBS is added;
an access network device for delivering data of the first MBS is removed;
a user plane function network element configured to deliver data of the first MBS is added;
a user plane function network element configured to deliver data of the first MBS is removed; or
the service area of the first MBS changes.

6. The method according to claim 4 or 5, further comprising:
updating, by the first network element, the charging information of the first MBS based on the second message.

7. The method according to any one of claims 1 to 6, wherein the usage report comprises a rating group.

8. The method according to any one of claims 1 to 7, further comprising:
sending, by the first network element, a quota of a rating group of the terminal for the first MBS to the second network element.

9. The method according to any one of claims 1 to 8, further comprising:
sending, by the first network element, a quota of the rating group of the first MBS to the third network element.

10. The method according to any one of claims 1 to 9, further comprising:
sending, by the first network element, a first charging policy to the second network element, wherein the first charging policy comprises the trigger of the first message.

11. The method according to any one of claims 4 to 9, further comprising:
sending, by the first network element, a second charging policy to the third network element, wherein the second charging policy comprises the trigger of the second message.

12. The method according to any one of claims 1 to 11, wherein the first network element is a charging function CHF network element; and the second network element is a session management function SMF network element, and the third network element is a multicast/broadcast session management function MB-SMF network element; or the second network element is a first charging trigger function CTF, and the third network element is a second CTF.

13. A communication method, comprising:
generating, by a second network element, a first message, wherein the first message comprises an identifier of a first multicast/broadcast service MBS and at least one of the following information:
a trigger of the first message, a delivery method of the first MBS, or a usage report of a terminal joining the first MBS for the first MBS; and
sending, by the second network element, the first message to a first network element.

14. The method according to claim 13, wherein the trigger of the first message comprises:
a terminal joins the first MBS;
a terminal leaves the first MBS; or
the delivery method of the first MBS changes.

15. The method according to claim 13 or 14, wherein the delivery method of the first MBS is a 5G core network individual multicast/broadcast service traffic delivery method 5GC individual MBS traffic delivery method or a 5G core network shared multicast/broadcast service traffic delivery method 5GC shared MBS traffic delivery method.

16. The method according to any one of claims 13 to 15, wherein the usage report comprises a rating group.

17. The method according to claim 16, further comprising:
receiving, by the second network element, a quota of a rating group of the terminal for the first MBS from the first network element.

18. The method according to any one of claims 13 to 17, wherein the second network element sends the first message to the first network element, and the method further comprises:
sending, by the second network element, context request information of the first MBS to a third network element; and
receiving, by the second network element, context information of the first MBS from the third network element, wherein the context information comprises identification information of the first network element; and
the sending, by the second network element, the first message to a first network element comprises:
sending, by the second network element, the first message to the first network element based on the identification information of the first network element.

19. The method according to any one of claims 13 to 18, further comprising:
receiving, by the second network element, a first charging policy from the first network element, wherein the first charging policy comprises the trigger of the first message; and
determining, by the second network element according to the first charging policy, to send the trigger of the first message.

20. A communication method, comprising:
generating, by a third network element, a second message, wherein the second message comprises at least one of the following information:
a charging identifier of the first multicast/broadcast service MBS, a trigger of the second message, a service type of the first MBS, quality of service QoS information of the first MBS, a service area of the first MBS, a usage report of the first MBS, or an identifier of the first MBS; and
sending, by the third network element, the second message to a first network element.

21. The method according to claim 20, wherein the trigger of the second message comprises one of the following:
a session corresponding to the first MBS is activated;
a session corresponding to the first MBS is deactivated;
a multicast/broadcast user plane function network element configured to deliver data of the first MBS is added;
a multicast/broadcast user plane function network element configured to deliver data of the first MBS is removed;
an access network device for delivering data of the first MBS is added;
an access network device for delivering data of the first MBS is removed;
a user plane function network element configured to deliver data of the first MBS is added;
a user plane function network element configured to deliver data of the first MBS is removed; or
the service area of the first MBS changes.

22. The method according to claim 20 or 21, wherein the usage report comprises a rating group.

23. The method according to claim 22, further comprising:
receiving, by the third network element, a rating group and/or a quota of the first MBS from the first network element.

24. The method according to any one of claims 20 to 23, further comprising:
receiving, by the third network element, context request information of the first MBS from a second network element; and
sending, by the third network element, context information of the first MBS to the second network element, wherein the context information comprises an identifier of the first network element.

25. The method according to any one of claims 20 to 24, further comprising:
receiving, by the third network element, a second charging policy from the first network element, wherein the second charging policy comprises the trigger of the second message; and
determining, by the third network element according to the second charging policy, to send the trigger of the second message.

26. A communication apparatus, comprising a functional module for implementing the method according to any one of claims 1 to 25.

27. A communication apparatus, comprising at least one processor and a memory, wherein
the memory is configured to store a computer program or instructions; and
the at least one processor is configured to execute the computer program or the instructions, to enable the method according to any one of claims 1 to 25 to be performed.

28. A chip system, wherein the chip system comprises a processing circuit, wherein the processing circuit is coupled to a storage medium; and
the processing circuit is configured to: execute a part or all of a computer program or instructions in the storage medium, and when the part or all of the computer program or the instructions are executed, the processing circuit is configured to implement the method according to any one of claims 1 to 25.

29. A computer-readable storage medium, wherein the computer-readable storage medium stores instructions, and when the instructions are executed by a computer, the method according to any one of claims 1 to 25 is performed.

30. A computer program product comprising a computer program or instructions, wherein when the computer program product runs on a computer, the method according to any one of claims 1 to 25 is performed.

31. A communication system, comprising:
a first network element, a second network element, and a third network element,
wherein
the first network element is configured to perform the method according to any one of claims 1 to 12, the second network element is configured to perform the method according to any one of claims 13 to 19, and the third network element is configured to perform the method according to any one of claims 20 to 25.
